## Europäisches Patentamt

## European Patent Office

## Office européen des brevets

(19)

(11) Veröffentlichungsnummer: **0 168 558**
**B1**

(12) **EUROPÄISCHE PATENTSCHRIFT**

(45) Veröffentlichungstag der Patentschrift:
31.01.90

(51) Int. Cl.⁴: **B 29 C 45/14**

(21) Anmeldenummer: **85104437.0**

(22) Anmeldetag: **12.04.85**

(54) **Verfahren und Vorrichtung zum Herstellen von Wärme- und/oder Stoffaustauschern, die Rohre enthalten.**

(30) Priorität: **18.07.84  DE 3426445**
            **19.12.84  DE 3446293**

(43) Veröffentlichungstag der Anmeldung:
**22.01.86 Patentblatt 86/4**

(45) Bekanntmachung des Hinweises auf die Patenterteilung:
**31.01.90 Patentblatt 90/5**

(84) Benannte Vertragsstaaten:
**BE CH DE FR GB IT LI NL**

(56) Entgegenhaltungen:
**DE-A- 1 937 783**
**DE-A- 2 920 259**
**DE-A- 3 142 921**
**FR-A- 2 178 253**
**GB-A- 1 214 841**
**GB-A- 1 379 511**
**GB-A- 2 054 449**

(73) Patentinhaber: **Akzo Patente GmbH,
Postfach 10 01 49 Kasinostrasse 19-23,
D-5600 Wuppertal-1 (DE)**

(72) Erfinder: **Wollbeck, Rudi, Am Stadtwald 24,
D-8765 Erlenbach (DE)**
Erfinder: **Zang, Thomas, Ziegelbergweg 9,
D-8752 Goldbach (DE)**
Erfinder: **Klarenberg, D.A., Eduard van Beinum Laan 75,
NL-6952 CK Dieren (NL)**
Erfinder: **Korstanje, H.P., Dipl.-Ing., Jachtlaan 8,
NL-6891 CK Rozendaal (NL)**

ACTORUM AG

## Beschreibung

Die Erfindung bezieht sich auf ein Verfahren zum Herstellen von Wärme- und/oder Stoffaustauschern, die Rohre enthalten, mittels Spritzgießen eines thermoplastischen Werkstoffes mit Hilfe einer aus mindestens zwei Teilen, beispielsweise einer Ober- und Unterform, bestehenden Spritzgießform sowie auf eine Vorrichtung zum Herstellen von Wärme- und/oder Stoffaustauschern, die Rohre enthalten, mit einer aus mindestens zwei Teilen bestehenden Spritzgießform zur Durchführung dieses Verfahrens.

Aus der DE-OS 28 24 934 ist ein Verfahren und eine Vorrichtung zum Herstellen von Stoffaustauschern bekannt, bei dem ein Hohlfadenbündel in eine Gießform eingelegt wird, in welche erschmolzenes thermoplastisches Material eingefüllt wird. Nach dem Erstarren des thermoplastischen Materials wird das Faserbündel der Form entnommen und im Bereich des erstarrten thermoplastischen Materials geschnitten. Auf diese Weise entstehen zwei Rohrböden. Sind an beiden Enden des Hohlfadenbündels Rohrböden angegossen, ist ein Stoffaustauscher entstanden, bei dem lediglich noch die erforderlichen Anschlüsse angebracht werden, und welcher gegebenenfalls in ein Gehäuse eingesetzt wird. In dieser DE-OS 28 24 934 wird auch ausgeführt, daß bereits Versuche durchgeführt worden sind, Rohrböden durch Druckimprägnierung mit polymeren Zusammensetzungen jeweils eines Endes des vorgeschnittenen Hohlfaserbündels zu erhalten. Diese Druckimprägnierung hätte jedoch den Nachteil, daß die äußerst dünnen Wände der Hohlfäden brechen oder zerdrückt werden, und daß die offenen Fadenenden leicht verstopfen.

Aus der DE-OS 30 27 087 ist ein gattungsgemäßes Verfahren bekannt, bei dem mehrere Rohre über Spritzgießen mit einem Rohrboden versehen werden, bei dem zum Spritzgießen in die Rohre Vorsprünge eingeführt werden. Dieses Verfahren ist jedoch nur günstig anwendbar, wenn die Rohre nach dem Spritzgießen lediglich in einer Ebene liegen, wobei die Festigkeit der Verbindung zwischen den Rohren und dem Rohrboden kaum über die mit einer Klebeverbindung zu erreichende Festigkeit hinausgeht. Dieses bekannte Verfahren wird dann sehr aufwendig, wenn die Rohre nach dem Spritzgießen in mehreren Ebenen angeordnet sein sollen. Häufig kann dieses Verfahren aufgrund der gewünschten Lage der Rohre gar nicht mehr angewendet werden.

Weiterhin ist aus der EP-A-22 234 bekannt, Metallrohre mit einem Rohrboden zu verkleben, indem zunächst die Metallrohre in den Rohrboden gesteckt werden und dann der Rohrboden von außen mit Kleber beschichtet wird. Zur Verbesserung der Haftung des Klebers, kann dieser nach dem Beschichten einem erhöhten Druck ausgesetzt werden. Die Metallrohre sind außerdem zwischen den beiden Rohrböden über eine Vielzahl von Lamellen miteinander verbunden. Bei dieser Art der Verbindung sind viele Arbeitsgänge erforderlich, und das Aushärten der Klebeverbindung ist sehr zeitaufwendig. Das Beschichten des Rohrbodens mit Kleber ist ebenfalls umso zeitaufwendiger, und bedarf umso mehr Sorgfalt, desto mehr Rohre in einen Rohrboden eingeklebt werden sollen.

Es ist Aufgabe der vorliegenden Erfindung, unter Vermeidung der oben beschriebenen Nachteile ein Verfahren und eine Vorrichtung zum Herstellen von Wärme- und/oder Stoffaustauschern, die Rohre enthalten, mittels Spritzgießen eines thermoplastischen Werkstoffes mit Hilfe einer aus mindestens zwei Teilen, beispielsweise einer Ober- und Unterform bestehenden Spritzgießform zur Verfügung zu stellen, welche besonders beim Einsatz von dünnwandigen und/oder leicht verformbaren Rohren geeignet sind, und durch welche eine gute Verbindung der Rohre mit dem Rohrboden gewährleistet ist.

Diese Aufgabe wird erfindungsgemäß gelöst durch ein Verfahren der eingangs genannten Art, welches sich dadurch auszeichnet, daß in den ersten Teil der Spritzgießform (Ober- oder Unterform) ein vorzugsweise aus Kunststoff bestehender, vorzugsweise über Anschmelzen mit den Rohren verbindbarer Einsatz, dessen Boden für jedes Rohr eine durchgehende Öffnung aufweist, als Positionierungselement für die Rohre derart eingesetzt wird, daß der Einsatz wenigstens teilweise formschlüssig in den ersten Teil der Spritzgießform angeordnet ist, daß in jede Öffnung des Einsatzes ein Rohr eingesetzt wird, daß in jedes Rohr ein Dorn eingesetzt wird, wonach die Spritzgießform derart angeschlossen wird, daß gegebenenfalls die Dorne im zweiten Teil der Spritzgießform (Unter- bzw. Oberform) kraft- und/oder formschlüssig positioniert sind, daß das erschmolzene thermoplastische Material über einen in die Spritzgießform eingearbeiteten Anspritzkanal in den von der Spritzgießform, dem Einsatz und den Rohrenden gebildeten Hohlraum eingespritzt wird, daß nach dem Erkalten des beim Abkühlen wenigstens anfänglich noch unter Druck gehaltenen thermoplastischen Materials die Teile der Spritzgießform auseinandergebracht, die Dorne entfernt und die über den thermoplastischen Werkstoff mit dem Einsatz verbundenen Rohre dem ersten Teil der Spritzgießform entnommen werden, und daß dann gegebenenfalls über die Spritzgießform die freien Enden der Rohre ebenfalls mit einem zweiten Einsatz verbunden werden.

Der Einsatz besteht in der Regel aus Kunststoff, es genügt jedoch, wenn der Einsatz aus einem anderen Material besteht und mit einer genügend dicken Beschichtung aus Kunststoff an den Stellen versehen ist, an denen die Verbindung zwischen Einsatz und thermoplastischem Werkstoff bzw. zwischen Einsatz und Rohren hergestellt werden soll.

Dieses Verfahren eignet sich besonders zum Herstellen von Rohrböden von Wärme- und/oder Stoffaustauschern, wobei beim Spritzgießen in der Regel ein thermoplastisches Material erschmolzen und unter hohem Druck in den von der Spritzgießform gebildeten Hohlraum über den Anspritzkanal eingespritzt wird. Beim Spritzgießen von thermoplastischem Material sind Drücke von bis zu 80 bar üblich. Höhere Drücke ergeben sich je nach Zusammensetzung des thermoplastischen Materials bzw. der Gestaltung der Spritzgießform.

Das Spritzgießen nach dem erfindungsgemäßen Verfahren ist nicht auf reine thermoplastische Materialen für den Spritzgießwerkstoff beschränkt. Die thermoplastischen Materialien können auch mit geeigneten Füllmitteln gemischt sein, wobei die Füllmittel in folgenden Formen vorliegen können:

- Kügelchen oder Körper mit isotropen Abmessungen, beispielsweise Talg, Metall, Oxide, Graphit, Flußmittel, u.ä.,
- Stäbchen oder andere Körper, deren Abmessungen in einer Dimension deutlich größer sind als in den beiden anderen Dimensionen, beispielsweise Kohlenstoff-Fasern, Asbestfassung, Kunststoff-Fasern, natürliche Fasern, u.ä.,
- Plättchen und andere Körper, deren Abmessungen in zwei Dimensionen wesentlich größer sind als in der dritten Dimension, beispielsweise Glimmerarten wie Phlogopit oder Muscovit, u.ä.

Weiterhin kann es günstig sein, daß das fertige Verfahrensprodukt, beispielsweise der Rohrboden, gegebenenfalls nach Anbringen weiterer Teile wie Flansche, Rohre usw. nachbehandelt wird. Beispielsweise kann eine Bestrahlung mit Gamma-, Rhöntgen-, Hochfrequenz- oder Ultraviolett-Strahlung erfolgen, wodurch der Erweichungspunkt der eingesetzten, spritzgegossenen thermoplastischen Materialen erhöht werden kann.

Unter dem Begriff Rohre sind im Sinne der Erfindung zusammengefaßt alle rohrförmigen Körper, wie beispielsweise Rohre, Schläuche oder Hohlfäden. Die Querschnittsform der Rohre ist nicht auf kreisförmige Querschnitte beschränkt; die Rohre können auch elliptischen oder vieleckigen, beispielsweise dreieckigen, viereckigen, quadratischen, fünfeckigen u.s.w., Querschnitt aufweisen. Die Wandstärke der Rohre, die sich aufgrund des Außen- und Innenquerschnitts der Rohre ergibt, kann über den Umfang der Rohre gleich oder unterschiedlich sein. Außen- und Innenquerschnitt der Rohre können dieselbe oder verschiedene Querschnittsform aufweisen. Beispielsweise kann ein Rohr im Außenquerschnitt eine vieleckige Kontur und im Innenquerschnitt eine kreisförmige oder elliptische Kontur aufweisen. Auch kann der Innenquerschnitt der Rohre einen oder mehrere durchgehende Hohlräume aufweisen. Der Außen- und/oder Innenquerschnitt der Rohre kann auch noppenförmige Erhebungen oder Rippen aufweisen, so daß beim Einsatz derartiger Rohre in einem Wärme- und/oder Stoffaustauscher die Turbulenz des Strömungsmediums erhöht wird, was eine Erhöhung des Wirkungsgrades bewirkt. Rohre, für die das erfindungsgemäße Verfahren besonders günstig anwendbar ist, bestehen in der Regel aus Polymeren. Geeignete Polymere sind beispielsweise Polyamide, Polyester, Polycarbonate, Polypropylene, Polyäthylene, Polyisobutylene, PVC, spritzgießbare Copolymere, die Tetrafluoräthylen-Monomere enthalten, Polyvinylidenfluorid (PVDF), aromatische Ätherimide, Polysulfon, Polyäthersulfon oder Polyesterätherketon (PEEK).

Das Einsetzen der Rohre erfolgt günstigerweise derart, daß in jede Öffnung des Einsatzes ein Rohr derart eingesetzt wird, daß das Rohrende innen aus dem Boden des Einsatzes herausragt. Um eine sichere Positionierung der Rohre im Einsatz während des Spritzgießverfahrens zu gewährleisten, können die Rohre gegen Längsverschiebung fixiert werden.

Bei dem erfindungsgemäßen Verfahren ist es zweckmäßig, daß zum Erkalten des thermoplastischen Materials die Spritzgießform temperiert wird. Die Temperierung der Spritzgießform kann im einfachsten Fall über eine in der Ober- und/oder in der Unterform verlaufende Bohrung bewerkstelligt werden, durch welche ein Temperiermedium, beispielsweise Wasser, Öl oder Gas, hindurchgeleitet wird.

Es ist von Vorteil, wenn die Innenfläche der Spritzgießform und die Außenflächen der Dorne eine glatte Oberfläche aufweisen, poliert sind oder mit einem Material überzogen sind, welches eine Haftung zwischen den Rohren und den Dornen verhindert, um ein Verkleben der Spritzgießmasse bzw. der Rohre mit der Spritzgießform bzw. den Dornen zu verhindern.

Die Verklebung der Dorne mit den Rohren kann auch dadurch wirkungsvoll vermieden werden, daß die Dorne während und/oder nach dem Spritzgießvorgang gekühlt werden. Günstigerweise weisen die Dorne hierfür durchgehende Hohlräume auf, durch welche zur Kühlung der Dorne ein Kühlmedium hindurchgeleitet wird. Hierfür können praktisch alle bekannten flüssigen oder gasförmigen Kühlmedien eingesetzt werden. Es hat sich jedoch als vorteilhaft herausgestellt, wenn als Kühlmedium ein Gas, vorzugsweise Luft oder Helium verwendet wird. Das Kühlmedium kann entweder über die Spritzgießform den Dornen zugeführt werden, wobei der Abfluß durch die Rohre erfolgt, oder es kann über die Dorne Raumluft angesaugt werden.

Das erfindungsgemäße Verfahren zeichnet sich besonders dadurch aus, daß zunächst mehrere Rohre zu Rohrgruppen verbunden werden, und die Rohrgruppen in entsprechende durchgehende Öffnungen des Einsatzbodens eingesetzt werden. Hohlfäden können beispielsweise als Schußfäden in ein Gewebe eingebettet sein, flexible Rohre können aber auch dadurch zu Rohrgruppen zusammengefaßt werden, wenn sie miteinander verdreht werden. Das erfindungsgemäße Verfahren wird dadurch erleichtert, wenn die Rohre achsparallel oder nahezu achsparallel zu Rohrgruppen zusammengefaßt werden. Diese Zusammenfassung kann beispielsweise vorteilhaft dadurch geschehen, daß anschließend der Querschnitt der Rohrgruppen senkrecht zur Achse der Rohre die Form einer Platte, beispielsweise einer ebenen, profilierten oder spiraligen Platte aufweist.

Die Zusammenfassung der Rohre kann beispielsweise bereits beim Herstellen der Rohre bewerkstelligt werden. Hierzu können die Rohre beim Vergießen im noch klebrigen Zustand zusammengeführt werden, so daß sie miteinander verkleben.

Es können auch Rohre unterschiedlichen Querschnitts zu Rohrgruppen zusammengefaßt werden. Plattenförmige Gebilde, die mehrere durchgehende Hohlräume und somit beispielsweise die Form von Rohrplatten aufweisen, kann man im Sinne der Erfindung entweder als Rohre oder als Rohrgruppe bezeichnen. Diese plattenförmigen Gebilde, die mehrere durchgehende Hohlräume aufweisen, können die Form einer ebenen Platte aufweisen, sie können aber auch die Form einer profilierten oder spiraligen Platte annehmen. Beispiele für profilierte und spiralige Plattenformen sind in den Figuren gezeigt und in der Figurenbeschreibung beschrieben.

Es hat sich als zweckmäßig erwiesen, wenn jeweils 20 bis 2 000, 20 bis 1 000, vorzugsweise 20 bis 100 Rohre zu Rohrgruppen zusammengefaßt werden, also beispielsweise Platten mit 20 bis 1 000, vorzugsweise 20 bis 100 durchgehenden Hohlräumen als Ausgangsmaterial bei der Durchführung des erfindungsgemäßen Verfahrens eingesetzt werden.

Das erfindungsgemäße Verfahren kann vorzüglich angewandt werden, wenn Rohre aus nichtporösem Material oder aus porösem Material mit einem Porenvolumen bis zu 90% eingesetzt werden, deren hydraulischer Durchmesser $d_h$ zwischen 0,5 bis 25 mm, vorzugsweise 0,5 bis 15 mm liegt. Ein weiterer bevorzugter Bereich liegt bei 0,8 bis 10 mm.

Der hydraulische Durchmesser $d_h$ ist bekanntlich definiert als Quotient der vierfachen Innenquerschnittsfläche geteilt durch den benetzten Innenumfang (siehe hiezu Dubbel, Taschenbuch für den Maschinenbau, 13. Auflage, 1970, Seite 314, Absatz 4).

$$d_h = \frac{4 \cdot \text{Innenquerschnittsfläche}}{\text{benetzter Innenumfang}}$$

Da der hydraulische Durchmesser $d_h$ auf dem Innenquerschnitt bezogen ist, gilt die Bedingung, daß der hydraulische Durchmesser zwischen 0,5 und 25 mm liegen soll, bei Rohrgruppen bzw. Rohrplatten jeweils für den einzelnen durchgehenden Hohlraum.

Bei Rohren, deren hydraulischer Durchmesser zwischen 0,5 und 25 mm bzw. 0,5 und 15 mm liegt, gelingt das erfindungsgemäße Verfahren vorzüglich, wenn die Wandstärke der Rohre an der dünnsten Stelle einen Wert von etwa 5 bis 25% des hydraulischen Durchmessers $d_h$ aufweist.

Werden die Rohre aus nichtporösem oder aus porösem Material mit einem Porenvolumen von weniger als 50% eingesetzt, liegt deren hydraulischer Durchmesser $d_h$ günstigerweise zwischen 0,5 und 5 mm, vorzugsweise zwischen 0,8 und 3 mm. Hierbei werden Rohrwandstärken bevorzugt, die an der dünnsten Stelle einen Wert von etwa 7,5 bis 17,5% des hydraulischen Durchmessers $d_h$ aufweisen. Die Rohre, die Einsätze und das thermoplastische Material, welches zum Spritzgießen eingesetzt wird, bestehen günstigerweise aus thermoplastischen Polymeren. Es ist von Vorteil, wenn diese thermoplastische Polymere, aus denen die Rohre, die Einsätze und das thermoplastische Material mindestens in den Bereichen, in denen die Verbindung untereinander erfolgt, bestehen, von ihrer Grundstruktur her zu derselben Polymersorte gehören. Ebenfalls ist es besonders günstig, wenn die Rohre, die Einsätze und das thermoplastische Material mindestens in den Bereichen, in denen die Verbindung untereinander erfolgt, aus thermoplastischen Polymeren bestehen, die denselben oder nahezu denselben Schmelzpunkt bzw. Schmelzbereich aufweisen.

Bei Anwendung des erfindungsgemäßen Verfahrens gibt es keine Probleme mit Dichtheit und Festigkeit der Verbindungsstelle zwischen Rohr und Rohrboden. Dichtheit und Festigkeit der Verbindungsstellen zwischen Rohr und Rohrboden wird dann besonders günstig beeinflußt, wenn mindestens die Rohre vor dem Einspritzen des thermoplastischen Materials auf eine Temperatur $T_c$ erwärmt werden, die unterhalb der Schmelzpunkttemperatur bzw. der gemittelten Temperatur des Schmelzbereiches $T_m$ des Röhrenwerkstoffes liegt, wenn weiterhin das zu Schmelze erhitzte thermoplastische Material auf eine Temperatur $T_i$ erhitzt wird, die größer ist als $T_m$, und wenn die Temperaturunterschiede $T_i$–$T_m$ und $T_m$–$T_c$ derart gewählt werden, daß beim Einspritzen der Schmelze die Rohre kurzfristig so hoch erhitzt werden, daß diese im Bereich der Öffnungen des Einsatzes mindestens über eine Länge, die der Wanddicke der Rohre entspricht, mit dem Einsatz fest verschmelzen. $T_m$ entspricht bei Polymeren, die einen ausgeprägten Schmelzpunkt haben, der Schmelzpunkttemperatur.

Eine besonders gute Festigkeit der Verbindungsstelle zwischen Rohr und Rohrboden wird dadurch erreicht, daß die Temperaturunterschiede $T_i$–$T_m$ und $T_m$–$T_c$ derart gewählt werden, daß beim Einspritzen der Schmelze die Rohre kurzfristig so hoch erhitzt werden, daß diese über etwa den gesamten Längenbereich der Öffnungen des Einsatzes mit dem Einsatz fest verschmelzen.

Günstigerweise wählt man den Temperaturunterschied $T_i$–$T_m$ zwischen 20 und 90 °C, vorzugsweise zwischen 30 und 70 °C. Erfindungsgemäß konnte festgestellt werden, daß in diesem Temperaturunterschiedsbereich eine besonders feste und dauerhafte Verbindung zwischen Rohren und Rohrboden erreicht wird. Dies gilt insbesondere, wenn der Temperaturunterschied $T_m$–$T_c$ mindestens gleich $T_i$–$T_m$ und höchstens gleich $T_m$–40 °C gewählt wird. Beim Beginn des Einspritzvorganges bzw. im Verlauf des Einspritzens der Schmelze muß dann mit der Kühlung der Rohre begonnen werden.

Die gewählten Temperaturen der Rohre, auf welche die Rohre erhitzt bzw. gekühlt werden sollen, vor, während und nach dem Einspritzen der Schmelze werden günstigerweise über ein Gas, welches durch die Hohlräume der Dorne geleitet wird, eingestellt.

Als thermoplastisches Material für Rohre, Einsätze und Spritzmaterial hat sich besonders PVDF, Polypropylen, Polyäthylen oder Polycarbonat bewährt.

Die erfindungsgemäße Aufgabe wird auch gelöst durch eine Vorrichtung zum Herstellen von Wärme- und/oder Stoffaustauschern, die Rohre enthalten, mit einer aus mindestens zwei Teilen bestehenden Spritzgießform zur Durchführung des erfindungsgemäßen Verfahrens, welche sich dadurch auszeichnet, daß im ersten Teil der Spritzgießform ein Einsatz zur Positionierung der Dorne mindestens teilweise formschlüssig angeordnet ist, daß der erste Teil der Spritzgießform für alle Rohre eine gemeinsame Öffnung und der Einsatz für jedes Rohr eine durchgehende Öffnung aufweist, deren Innenabmessung der Außenabmessung des jeweiligen Rohres entspricht, und daß der zweite Teil der Spritzgießform Einrichtungen zur Aufnahme einer Anzahl von Dornen, deren Außenabmessung denen der Innenabmessung des jeweiligen Rohres, und deren Anzahl der der Rohre des herzustellenden Wärme- und/oder Stoffaustauschers entspricht, enthält, und daß in die Spritzgießform ein Anspritzkanal eingearbeitet ist. Die Dorne können hierbei einzeln oder in Gruppen in die Rohre eingeführt werden, wobei die Dorne einen Absatz aufweisen, bis zu welchem die Dorne eingeführt werden können, wonach der zweite Teil der Spritzgießform derart auf den ersten Teil aufgesetzt wird, daß die Dorne in dafür vorgesehenen Öffnungen bzw. Bohrungen des zweiten Teils der Spritzgießform positioniert sind. Ist die Anzahl der Rohre sehr groß, können die Dorne auch gruppenweise in Positionierbereich der Dorne miteinander verbunden sein. Die Dorne können aber auch im zweiten Teil der Spritzgießform befestigt sein. Bei einer derartigen Ausführungsform werden die Dorne beim Aufsetzen des zweiten Teils auf den ersten Teil der Spritzgießform in die Öffnungen der Rohre eingeführt.

Es ist zweckmäßig, wenn der erste und/oder zweite Teil der Spritzgießform eine Kühlvorrichtung enthält. Diese Kühlvorrichtung kann im einfachsten Fall eine in dem ersten Teil oder in dem zweiten Teil verlaufende Bohrung sein, durch welche das Kühlmedium, beispielsweise gekühltes Wasser, gekühltes Gas oder gekühlte Luft, hindurchgeleitet wird. Der erste und/oder der zweite Teil der Spritzgießform kann auch eine Heizeinrichtung enthalten. Heizeinrichtung und Kühleinrichtung können auch von derselben Einrichtung gebildet werden.

Eine Beheizung bzw. eine Kühlung der Dorne kann günstigerweise dadurch bewerkstelligt werden, daß die Dorne je einen durchgehenden Hohlraum aufweisen, wobei alle Hohlräume der Dorne im zweiten Teil der Spritzgießform mit einem Mediumverteiler verbunden sind. Dieser Mediumverteiler kann gleichzeitig die Heiz- bzw. Kühleinrichtung des zweiten Teils der Spritzgießform sein.

Der Einsatz im ersten Teil der Spritzgießform, der nach Beendigung des erfindungsgemäßen Verfahrens ein Teil des Rohrbodens des hergestellten Wärme- und/oder Stoffaustauschers ist, besteht bevorzugt aus einem thermoplastischen Polymeren, während alle anderen Teile der Spritzgießform (1. Teil, 2. Teil, Dorne usw.) aus Metall bestehen. Hierdurch wird bei allen Teilen der Spritzgießform eine gute Wärmezu- bzw. Wärmeabfuhr garantiert. Als Metalle kommen beispielsweise rostfreier Stahl, Einsatzstahl oder Kupfer infrage.

Günstigerweise weisen die durchgehenden Öffnungen des Einsatzes gegenüber den Außenabmessungen der Rohre eine Spielpassung auf. Der Begriff Spielpassung ist in DIN 7812 Blatt 2 definiert. Ebenso ist es zweckmäßig, wenn die Außenabmessungen der Dorne gegenüber den Innenabmessungen der Rohre eine Spielpassung aufweisen.

Um zu gewährleisten, daß die Dorne leicht in die Rohre eingeführt werden können, sind die Dorne an ihrem freien Ende verjüngt ausgebildet. Das freie Ende der Dorne ist dasjenige Ende der Dorne, welches nicht im zweiten Teil der Spritzgießform positioniert bzw. befestigt ist, und welches zum Einführen in die Rohre vorgesehen ist. Hierzu weisen die Dornenden entweder Spitzen auf, sind kegelstumpfförmig ausgebildet oder weisen eine andersartig geformte Verjüngung auf. Die Länge der Dorne wird zweckmäßigerweise derart gewählt, daß sie bei zusammengebauter Spritzgießform aus den Öffnungen des Einsatzes herausragen. Die Länge der Dorne soll also größer sein als die Dicke des herzustellenden Rohrbodens, wodurch die Unterstützung der Rohre über die gesamte Länge der Einbettung in den Rohrboden gewährleistet ist.

Zusätzlich weisen vorteilhaft die Dorne mit Ausnahme des Abschnitts, welcher vom zweiten Teil der Spritzgießform aufgenommen wird, zum freien Ende hin eine geringfügige Konizität auf, wodurch das Herausziehen der Dorne aus den Rohren nach Beendigung des Spritzgießvorganges erleichtert wird.

Es kann aber auch zweckmäßig sein, die Dorne derart auszubilden, daß sie mit Ausnahme des Abschnitts, welcher vom zweiten Teil der Spritzgießform aufgenommen wird, zum freien Ende hin einen abnehmenden Durchmesser aufweisen. Bei genügend hohem Druck und genügend hoher Temperatur des erschmolzenen Materials in dem von den Teilen der Spritzgießform bzw. dem Einsatz gebildeten Hohlraum können die Rohre im Bereich des Rohrbodens plastisch verformt bzw. angeschmolzen werden und auf diese Weise die Form der Dorne annehmen. Hierdurch lassen sich die Rohrenden zu Trichtern formen, wodurch im Bereich des Rohrbodens günstige Strömungsverhältnisse im fertigen Wärme- und/oder Stoffaustauscher eingestellt werden können.

Ein weiterer Vorteil der erfindungsgemäßen Vorrichtung ergibt sich dann, wenn der Einsatz auf seiner Innenseite mindestens eine umlaufende Nut aufweist. Beim Spritzgießvorgang fließt geschmolzenes Material in diese Nut, so daß auch bei hoher Beanspruchung des Rohrbodens, beispielsweise durch extreme Wärmeausdehnung der Rohre, im fertigen Wärme- und/oder Stoffaustauscher verhindert wird, daß das thermoplastische Material aus dem Einsatz herausgedrückt wird.

Die Erfindung wird anhand der nachfolgenden Figuren und Beispiele näher erläutert.

Es zeigen:

Figur 1 schematisch eine erfindungsgemäße Vorrichtung zum Herstellen eines mit Rohren versehenen Stoff- und/oder Wärmetauschers

Figur 2 bis 7 schematisch Querschnitte von Rohren mit mehreren durchgehenden Hohlräumen

Figur 8 schematisch die Anordnung von profilierten Rohrplatten im Querschnitt

Figur 9 schematisch eine profilierte Rohrplatte im Querschnitt

Figur 10 bis 15 schematisch verschiedene Profilformen von Rohrplatten im Querschnitt

Figur 16 schematisch eine spiralige Anordnung zweier Rohrgruppen im Querschnitt

Figur 17 bis 27 schematisch mehrere Ausführungsformen von Rohrplatten im Querschnitt

Figur 28 bis 30 mögliche Querschnitte von Einzelrohren

Figur 31 drei miteinander verdrehte Rohre

Figur 32 bis 33 schematische Anordnungen von Rohrplatten im Einsatz

Figur 34 und 35 zwei Ausführungsformen von Einsätzen in perspektivischer Sicht

Figur 36 und 37 schematisch zwei erfindungsgemäße Vorrichtungen zum Herstellen von Platten-Stoff- und/oder Platten-Wärmeaustauschern

Figur 38 schematisch einen Rohrplatten-Wärmeaustauscher, hergestellt nach dem erfindungsgemäßen Verfahren, mit Rohranschlüssen

Figur 39 Einzelheit X aus Figur 38

Figur 40 schematisch den Aufbau eines Einsatzes mit umlaufender Nut auf Innen- und Außenseite

Figur 41 und 42 zwei mögliche Ausführungsformen von Dornen, die am freien Ende verjüngt ausgebildet sind

Figur 43 eine Prinzipskizze einer möglichen Anordnung mehrerer Dorne gemäß Figur 42.

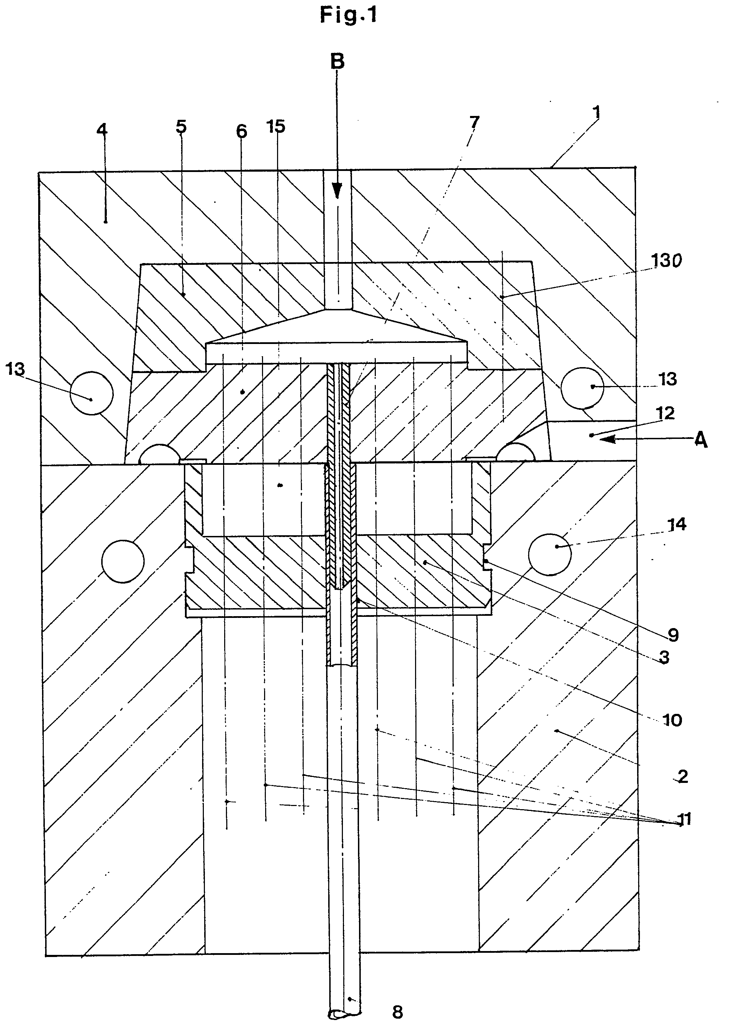

In Figur 1 ist schematisch eine erfindungsgemäße Vorrichtung zum Herstellen eines rohrförmigen Stoff- und/oder Wärmetauschers im zusammengebauten Zustand dargestellt, wobei in dieser Vorrichtung bereits Rohre eingesetzt sind. Hierbei ist mit 1 die Oberform und mit 2 die Unterform bezeichnet. In die Unterform 2 ist ein zylindrischer Einsatz 3 eingesetzt, dessen Boden für jedes Rohr eine durchgehende Öffnung 10 aufweist, wobei in der schematischen Darstellung der Figur lediglich eine durchgehende Öffnung dargestellt ist. In die durchgehende Öffnung 10 des zylindrischen Einsatzes 3 ist ein Rohr 8 bis zur Oberkante des zylindrischen Einsatzes 3 eingeführt. Das Rohr 8 ist im Bereich des zylindrischen Einsatzes im Schnitt und im unteren Bereich der Unterform 2 in Draufsicht dargestellt. Weitere Rohre 8 sind, wie beispielsweise in der Figur 1 angedeutet, längs der strichpunktierten Linien 11 eingesetzt. Die Oberform 1 besteht aus einem Halter 4, in welchem der Kühlmittelverteiler 5 und ein Dornhalter 6 eingesetzt ist. Halter 4, Kühlmittelverteiler 5 und Dornhalter 6 können beispielsweise durch Schrauben verbunden sein, die an einem Platz, der durch strichpunktierte Linien 130 gekennzeichnet ist, angeordnet sein. In den Dornhalter 6 sind Dorne 7 eingesetzt, die einen durchgehenden Hohlraum aufweisen. Der Übersichtlichkeit halber ist lediglich ein Dorn 7 dargestellt, wobei beispielsweise längs der strichpunktierten Linien 11 weitere Dorne 7 angeordnet sein können. Das freie Ende des Dornes 7 ist pyramidenstumpfförmig ausgebildet. Die Länge der Dorne ist derart gewählt, daß das freie Ende der Dorne bis in die Öffnung des Einsatzes 3 hineinragt, so daß die aus der Oberform herausragende Länge der Dorne größer ist als die Dicke des herzustellenden Rohrbodens. Über den Kühlmittelzufluß – in der Figur mit Pfeil B dargestellt – und über den Kühlmittelverteiler 5 kann den durchgehenden Hohlräumen der Dorne 7 Kühlmedium zugeführt werden, welches sich nach dem Verlassen der Dorne in die Rohre ergießt und am rückwärtigen Ende der Rohre ausfließt. Die Flußrichtung des Kühlmediums kann auch in zum Pfeil B entgegengesetzter Richtung gewählt werden, wenn an den Kühlmittelverteiler 5 eine Saugvorrichtung angeschlossen wird. Beim Saugen wird dann als Kühlmittel die die Spritzgießform umgebende Raumluft eingesetzt. Der Einsatz 3 weist an der äußeren Oberfläche eine Nut 9 auf, in welche die Unterform 2 eingreift, um eine axiale Festlegung des Einsatzes 3 zu erreichen. Um den Einsatz 3 in die Unterform einsetzen zu können, ist die Unterform 2 zweiteilig ausgebildet (in der Figur nicht dargestellt).

In die Oberform ist ein Anspritzkanal 12 eingearbeitet, durch welchen das erschmolzene Material zur Herstellung des Rohrbodens in Richtung des Pfeiles A in den von dem Einsatz 3 dem Dornhalter 6 (Oberform) und den Rohren 8 gebildeten Innenraum 15 unter hohem Druck eingepreßt wird. Im Halter 4 der Oberform 1 sind Bohrungen 13 und in der Unterform 2 Bohrungen 14 vorgesehen, durch welche Kühlmittel geleitet werden können.

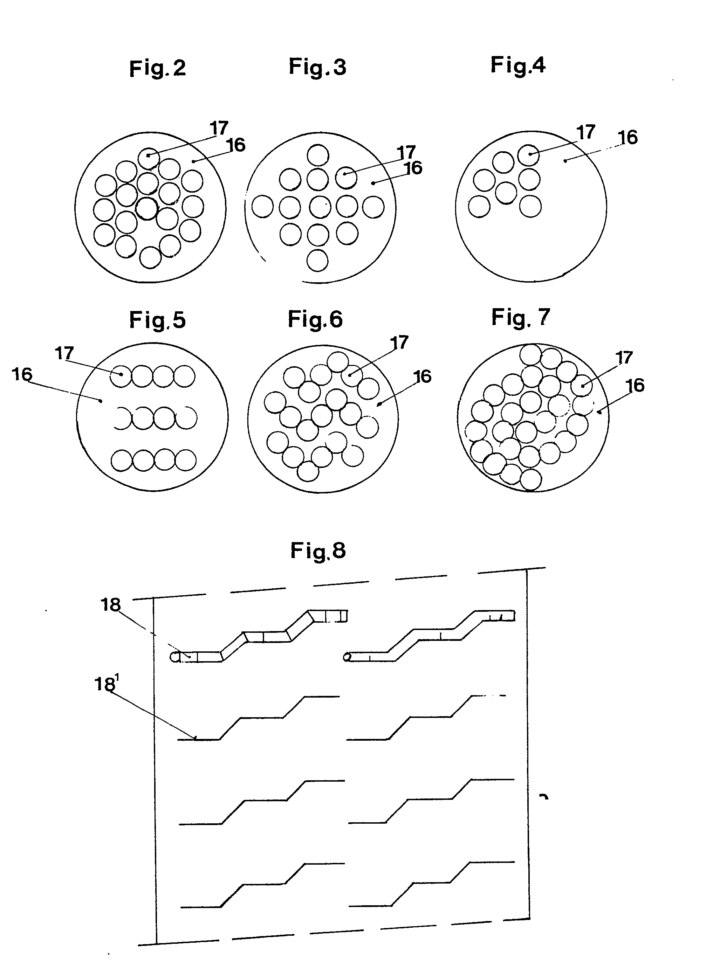

Anordnungsformen von Rohren in Rohrböden, von Stoff- und/oder Wärmeaustauscher mit der in Figur 1 schematisch dargestellten Vorrichtung hergestellt werden können, sind beispielsweise in den Figuren 2 bis 7 sowie den Figuren 28 bis 30 dargestellt. Der Außenquerschnitt der Rohrböden gemäß Fig. 2 bis 7 ist jeweils kreisförmig. In diesen Figuren 2 bis 7 sind jeweils die Rohrböden mit 16 und die Rohre mit 17 bezeichnet. In allen Fällen handelt es sich um Rohre, die mehrere durchgehende Rohre 17 enthalten. Die durchgehenden Rohre 17 können im Rohrboden 16 in verschiedener Weise angeordnet werden. In Figur 2 sind die durchgehenden Rohre 17 im Rohrboden 16 innerhalb einer sechseckigen Kontur angeordnet. Gemäß Figur 3 sind die durchgehenden Rohre 17 im Rohrboden 16 innerhalb einer viereckigen Kontur angeordnet. Bei Figur 4 liegen die durchgehenden Rohre 17 im Rohrboden 16 innerhalb einer kreisförmigen Kontur, wobei lediglich ein Teil der durchgehenden Rohre 17 dargestellt ist. In Figur 5 ist eine linienförmige Anordnung, in Figur 6 eine wellenlinienförmige und in Figur 7 eine spiralige Anordnung der durchgehenden Rohre 17 im Rohrboden 16 dargestellt.

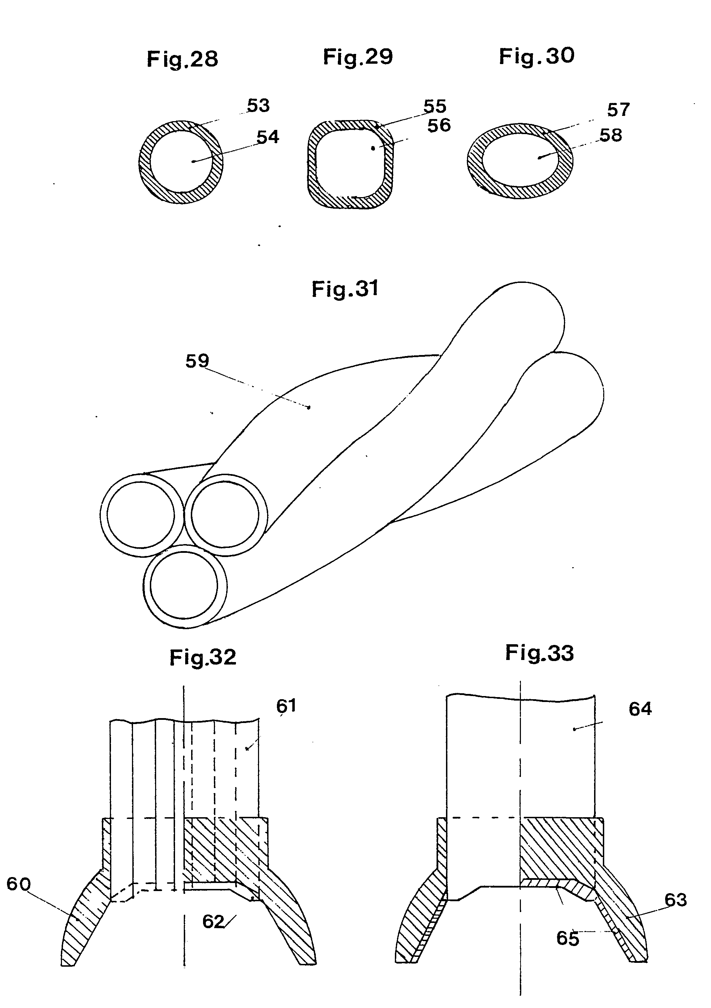

In Figur 28 bis 30 sind verschiedene Querschnittsformen von Rohren dargestellt, die lediglich einen durchgehenden Hohlraum aufweisen. Das Rohr 53 mit durchgehendem Hohlraum 54 gemäß Figur 28 hat einen kreisförmigen Außenquerschnitt und einen kreisförmigen Innenquerschnitt. Außen- und Innenquerschnitt können hierbei symmetrisch, wie in Figur 28 dargestellt, oder asymmetrisch angeordnet sein. Bei asymmetrischer Anordnung des Außen- und Innenquerschnitts weist das Rohr 53 auf dem Umfang unterschiedliche Wandstärke auf.

Das Rohr 55 gemäß Figur 29 weist einen quadratischen Außenquerschnitt auf, wobei jedoch die Ecken gerundet sind. Der durchgehende Hohlraum 56 dieses Rohres 55 weist ebenfalls einen quadratischen Innenquerschnitt mit gerundeten Ecken auf. Statt des quadratischen Innenquerschnittes könnte bei dem Rohr 55 gemäß Figur 29 auch ein kreisförmiger Innenquerschnitt vorhanden sein. Ebenso könnte der Innenquerschnitt quadratisch und der Außenquerschnitt kreisförmig ausgebildet sein. Ebenso können Außen- und/oder Innenquerschnitt elliptische Form aufweisen, wie in Figur 30 als Rohr 57 mit durchgehendem Hohlram 58 dargestellt.

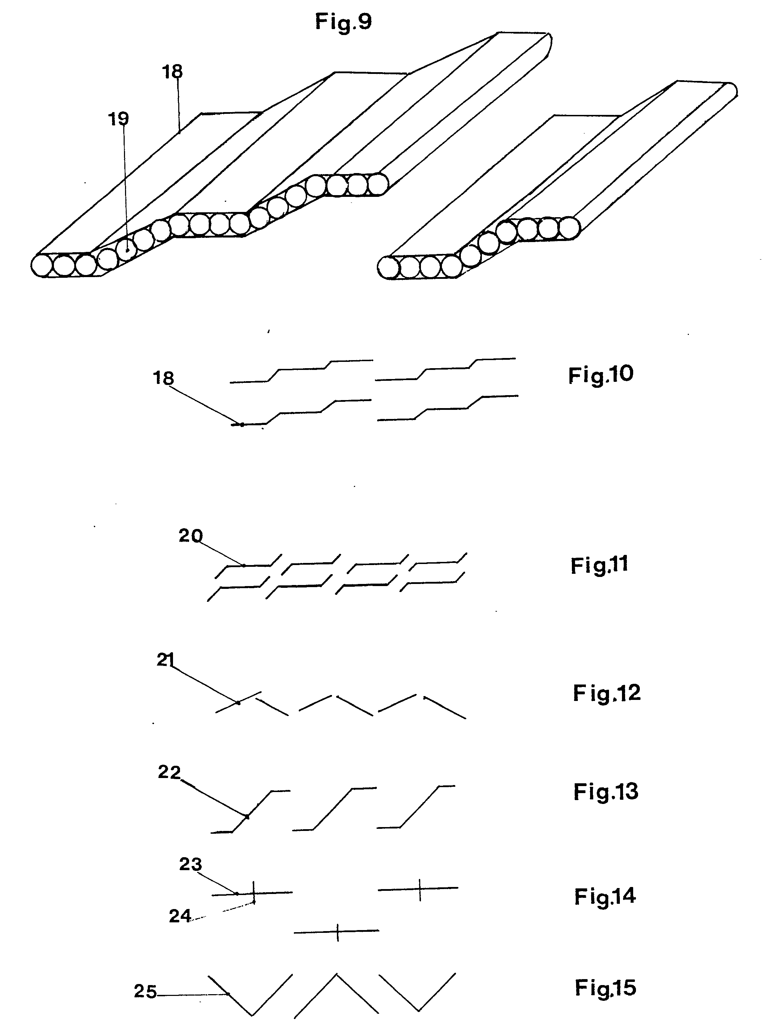

Werden Rohre achsparallel zu Rohrgruppen zusammengefaßt, so können Gebilde entstehen, wie sie beispielhaft in den Figuren 9 bis 27 und 39 dargestellt sind. Hierbei haben die Rohrgruppen die Form einer Platte. In Figur 9 sind zwei Platten-Röhrengruppen 18 dargestellt, die profilierte Platten darstellen. Die Profilform könnte man weitestgehend treppenförmig bezeichnen. Durch die durchgehenden Hohlräume 19 kann erkannt werden, daß die Platten 18 jeweils aus mehreren Rohren zusammengesetzt sind. Mehrere Profilformen von Rohrplatten sind in den Figuren 10 bis 15 dargestellt, wobei die Profilform in diesen Figuren lediglich noch als Striche angedeutet ist. Die Profile können folgendermaßen beschrieben werden: Profil 18 gemäß Figur 10: treppenförmig (wie in Figur 9 näher dargestellt), Profil 20 gemäß Figur 11: Platten mit angewinkelten Kanten, Profil 21 gemäß Figur 12: gewinkelte Platte in Dachform, Profil 22 gemäß Figur 13: Platten mit angewinkelten Kanten in Schrägform, Profil 23, 24 gemäß Figur 14: Platten in Kreuzform und Profil 25 gemäß Figur 15: Platten in V-Form. Die verschiedenen Profilformen der Rohrplatten eignen sich dafür, bestimmte Strömungsverhältnisse für das Medium, welches die Rohrplatten umfließt, vorzugeben.

Solche Profilplatten werden mehrfach nebeneinander angeordnet, um eine große Austauscherfläche zu bekommen. Dies ist in Figur 8 angedeutet, in welcher das Profil gemäß Figur 9 und 10 verwendet wurde, und mehrere Platten 18 nebeneinander angeordnet wurden. Bei 18 sind die Konturen der Profilplatten noch dargestellt, wobei auf die Darstellung der durchgehenden Hohlräume verzichtet wurde, während bei 18' die Profilform lediglich noch mit Strichen dargestellt wurde.

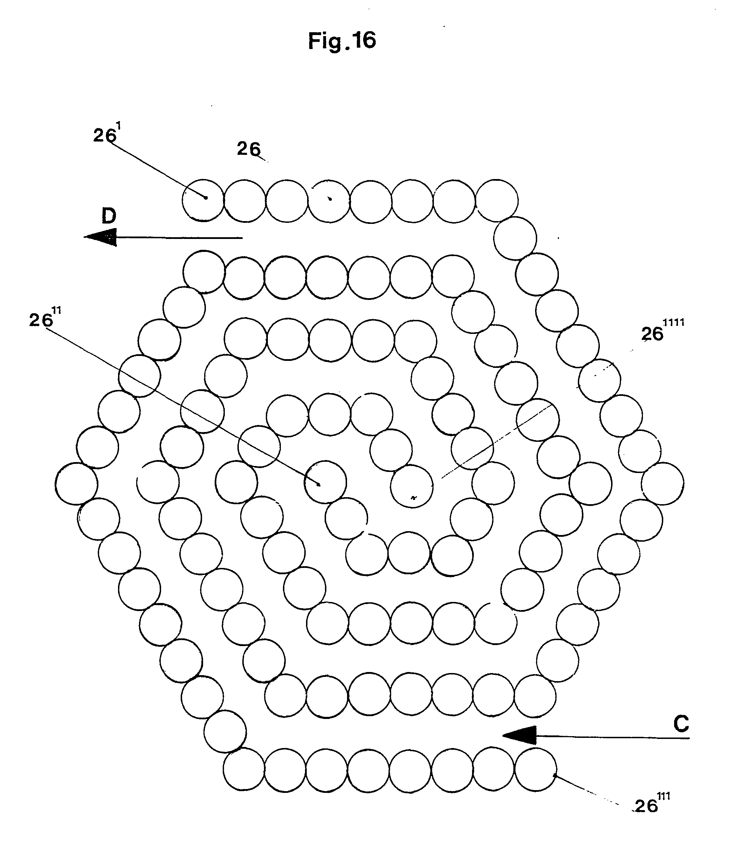

In Figur 16 ist beispielhaft eine spiralige Anordnung zweier Rohrgruppen dargestellt, wobei die eine Rohrgruppe aus Rohren 26 zusammengesetzt ist, und die beiden Endröhren mit 26' und 26'' bezeichnet sind. Die Endröhren der anderen Rohrgruppen sind mit 26''' und 26'''' bezeichnet. Diese beiden Rohrgruppen können auch über Platten-Röhrengruppen zusammengestellt werden, so daß sich zwei spiralige Platten-Röhrengruppen ergeben. Werden zwei spiralige Platten-Röhrengruppen in der in Figur 16 dargestellten Weise zusammengestellt, ergibt sich für das Medium, welches die Röhren beim fertigen Wärme- und/oder Stoffaustauscher umströmen soll, ein Kanal, in den das Medium beispielsweise in Pfeilrichtung C am äußeren Umfang 1 strömt, dann bis zur Mitte und anschließend nach außen geleitet wird und in Umfangsrichtung in Pfeilrichtung D wieder abströmt. Hierbei wechselt das Medium einmal die Drehrichtung, wodurch sich die Effektivität eines solchen Wärmetauschers erhöht.

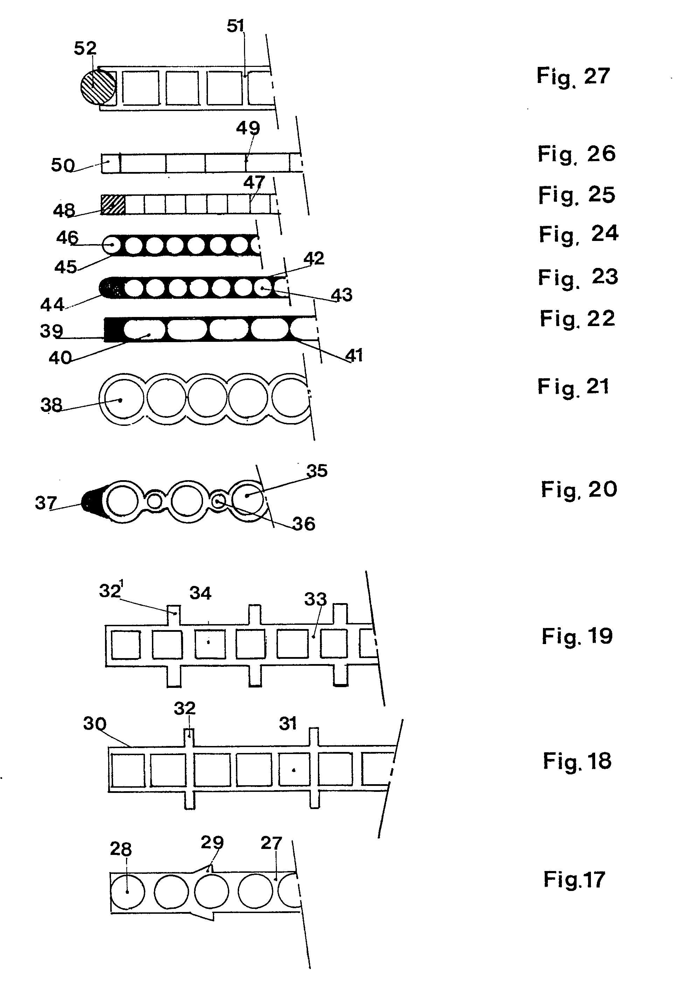

In den Figuren 17 bis 27 ist der innere Aufbau von Rohrplatten beispielhaft, ausschnittsweise und schematisch im Querschnitt dargestellt. In Figur 17 handelt es sich um eine Platte 27 welche durchgehende Hohlräume 28 mit kreisförmigem Querschnitt aufweist. Die Nasen 29 an der Platte 27 werden mit Turbulenz-Promotoren bezeichnet und dienen zur Erzeugung von Turbulenz des die Platte umströmenden Mediums. In Figur 18 wird eine Stegplatte 30 dargestellt, die durchgehende Hohlräume 31 mit quadratischem Querschnitt und Turbulenz-Promotoren 32 aufweisen. Da die Wandstärke in der gemäß Figur 18 dargestellten Rohrplatte relativ gering ist, können die Turbulenz-Promotoren 32 auch als Verstärkungsrippen für die Platte 30 wirken. In Figur 19 ist ebenfalls eine Stegplatte 33 mit stärkeren Wänden dargestellt, durch die Hohlräume 34 hindurchgehen. Die Turbulenz-Promotoren sind hier mit 32' bezeichnet.

Figur 20 zeigt den Ausschnitt einer Röhrengruppe, die aus zwei verschiedenen Sorten von Röhren zusammengesetzt ist.

Die beiden Röhrensorten unterscheiden sich hauptsächlich durch unterschiedliche Durchmesser. Bei der in Figur 20 dargestellten Konfiguration wechseln sich jeweils Rohre 20 mit großem und 36 mit kleinem Durchmesser ab. Die Außenkante dieser Konfiguration ist mit einer Nase 37 aus Vollmaterial ausgestattet, die als Schutz gegen Erosion und Beschädigung dient. Die Nase 37 kann beispielsweise dadurch hergestellt werden, daß ein Massivdraht an das letzte Rohr 35 angeschweißt wird. In Figur 21 sind mehrere Rohre 38 gleichen Durchmessers aneinandergefügt.

In Figur 22 ist die Platte mit 41 bezeichnet, welche durchgehende Hohlräume 40 aufweist, die elliptischen Querschnitt besitzen. Die Platte 41 ist an ihrer Außenkante verstärkt — wiederum als Schutz gegen Erosion und Beschädigung – . Gemäß Figur 23 weist die Platte 42 mehrere durchgehende kreisförmige Hohlräume 43 auf. Die Platte 42 ist mit einer Nase 44 (Schutznase) ausgerüstet. In Figur 24 weist die Platte 45 wiederum durchgehende kreisförmige Hohlräume 46 auf.

Figur 25 zeigt eine Stegplatte 47 mit Schutznase 48. In Figur 26 ist ebenfalls eine Stegplatte dargestellt, welche eine Schutz-Hohlnase 50 aufweist. Bei der in Figur 27 dargestellten Stegplatte 51 ist der letzte Steg an der Außenkante der Platte aufgeschnitten und in den aufgeschnittenen Steg ein Volldraht 52 als Schutznase eingelegt.

In Figur 31 sind drei miteinander verdrehte Rohre 59 dargestellt, die ebenfalls eine Röhrengruppe bilden. Ähnliche Anordnungen können auch durch Verweben von Rohren als «Schußrohre» hergestellt werden.

Die in den Figuren als Beispiele dargestellten Querschnitte von Rohren bzw. Rohrgruppen eignen sich ausnahmslos vorzüglich zur Durchführung des erfindungsgemäßen Verfahrens zum Herstellen von Wärme- und/oder Stoffaustauschern.

In den Figuren 32 und 33 ist schematisch dargestellt, auf welche Weise Rohrplatten in Einsätzen angeordnet sein können. In Figur 32 ist der Einsatz mit 60 bezeichnet, in welchem Rohrplatten 61 nebeneinander eingesetzt sind. Das nach dem erfindungsgemäßen Verfahren eingespritzte thermoplastische Material, welches die Rohre mit dem Einsatz verbindet, ist mit 62 bezeichnet.

In den Einsatz 63 gemäß Figur 33 sind die Platten 64 hintereinander angeordnet und über das thermoplastische Material 65 mit dem Einsatz 63 verbunden.

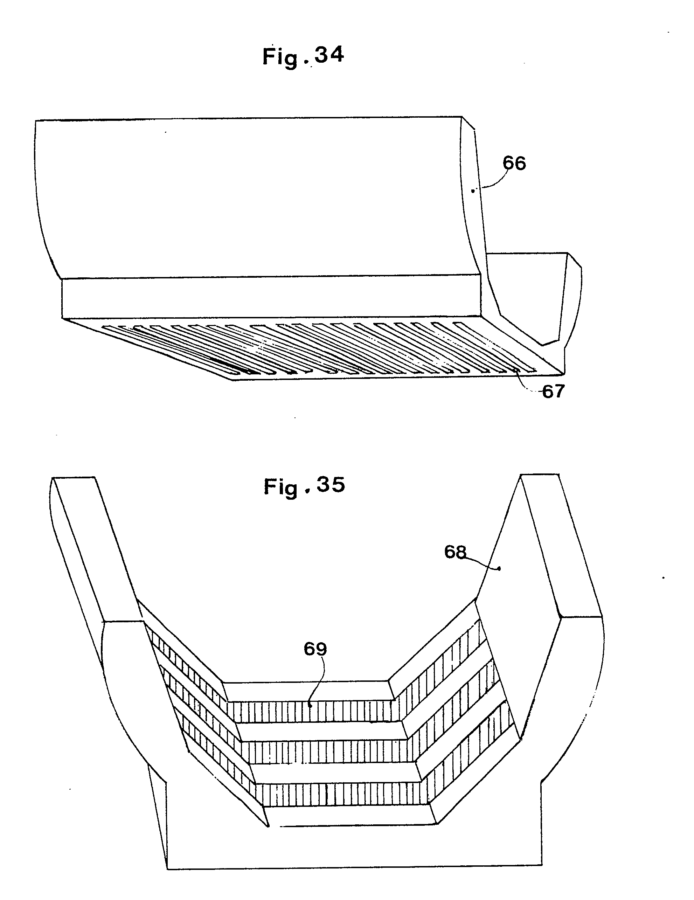

Die Figuren 34 und 35 zeigen zwei Ausführungsformen von Einsätzen 66 bzw. 68 in perspektivischer Darstellung, in denen durchgehende Öffnungen 67 bzw. 69 zur Aufnahme von Rohrplatten angeordnet sind.

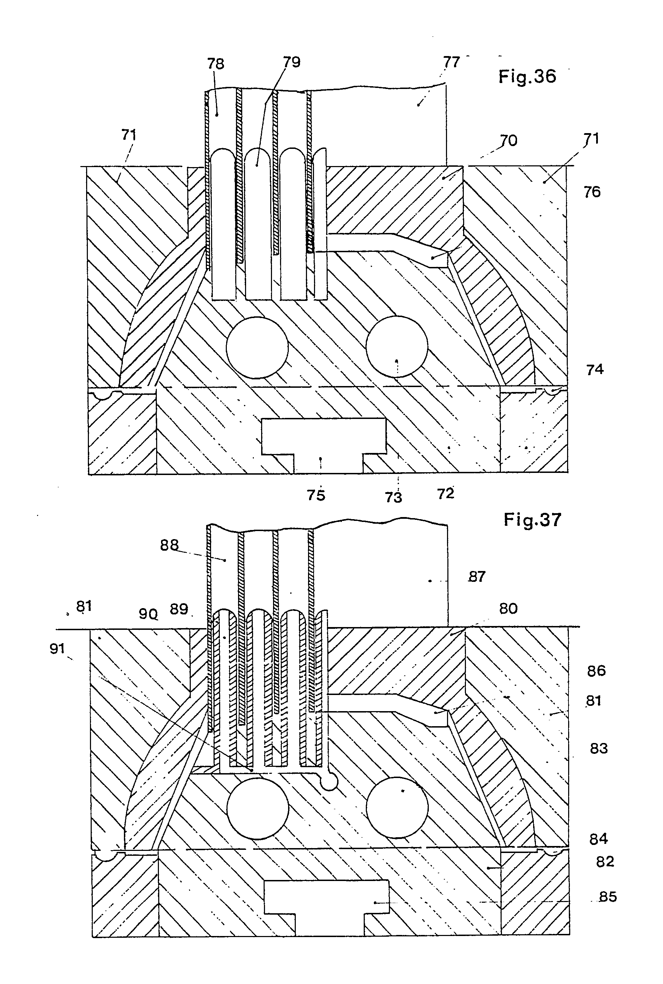

In Figur 36 ist eine erfindungsgemäße Vorrichtung zum Herstellen von Platten-Stoff- und/oder Platten-Wärmeaustauschern dargestellt. Ein Einsatz 70, der gleichzeitig als Positionierungselement für die Rohrplatten dient, ist in die Oberform 71 eingesetzt, die auf der Unterform 72 positioniert ist. Die Unterform 72 weist durchgehende Hohlräume 73 auf, die zur Durchleitung eines Kühl- bzw. Heizmediums vorgesehen sind. Anspritzkanäle 74 sind ebenfalls in die Unterform 72 eingearbeitet. Eine T-förmige Ausnehmung 75 ist in die Unterform 72 eingefräst; sie dient zur Halterung der Unterform 72 im Gestell der Spritzgießmaschine. In die Unterform 72 sind Dorne 79 kraft- und formschlüssig eingesetzt. Eine Röhrenplatte 77 ist im Einsatz 70 positioniert, wobei jeder durchgehende Hohlraum 78 der Röhrenplatte 77 einen Dorn 79 umfaßt. Die durchgehenden Hohlräume 78 der Röhrenplatte 77 sowie die Dorne 79 sind in der schematischen Darstellung gemäß Figur 36 lediglich in der linken Figurenhälfte dargestellt. Der mit thermoplastischem Material über Spritzguß zu füllende Hohlraum, welcher durch die Unterform 72, die Röhrenplatte 77, den Einsatz 70 und gegebenenfalls die Dorne 79 gebildet wird, ist in Figur 36 mit 76 bezeichnet.

Zur Durchführung des erfindungsgemäßen Verfahrens ergibt sich folgende Vorgehensweise: Auf die in der Spritzgießmaschine befestigte Unterform 72 werden der Einsatz 70 und die Oberform 71 aufgesetzt. Anschließend wird in jede durchgehende Öffnung des Einsatzes 70 eine Röhrenplatte 77 derart eingesetzt, daß in jedem durchgehenden Hohlraum 78 der Röhrenplatte 77 ein Dorn 79 positioniert ist. Nachdem alle Röhrenplatten 77 positioniert sind, werden diese mit bekannten Mitteln gegen Axialverschiebung fixiert. Nachdem die Unterform 72 und damit auch die Dorne 79 auf eine Temperatur $T_c$ erhitzt wurden, kann ein thermoplastisches Polymeres über den Anspritzkanal 74 unter Druck eingespritzt werden. Gegen Ende des Einspritzvorganges erfolgt die Kühlung der Unterform 72 und somit auch der Dorne 79. Nach dem Erstarren des thermoplastischen Polymeren wird die Oberform 71, die zu diesem Zwecke zweiteilig ausgebildet ist, abgenommen, wonach der Einsatz 70 mit den mit diesem verbundenen Röhrenplatten 77 abgezogen werden kann. Anschließend wird ein neuer Einsatz 70 und die Oberform 71 wiederum auf der Unterform 72 positioniert. Die freien Enden der Röhrenplatten 77 können nun gemeinsam in die Öffnungen des zweiten Einsatzes 70 eingeführt werden.

In Figur 37 ist ein weitere erfindungsgemäße Vorrichtung zum Herstellen von Platten-Stoff- und/oder Platten-Wärmeaustauschern dargestellt. Bei dieser erfindungsgemäßen Vorrichtung ist der Einsatz mit 80, die Oberform mit 81 und die Unterform mit 82 bezeichnet. In die Unterform 82, in die wiederum eine T-förmige Ausnehmung 85 zur Aufnahme in die Spritzgießmaschine eingearbeitet ist, sind Dorne 89 kraft- und formschlüssig eingesetzt, wobei die Dorne 89 jeweils einen durchgehenden Hohlraum 90 aufweisen. Alle durchgehenden Hohlräume 90 der Dorne 89 sind mit einem Verteiler 91 verbunden, mittels welchem über die durchgehenden Hohlräume 90 der Dorne 89 Kühl- bzw. Heizmedium zugeführt bzw. abgesaugt werden kann. Die Unterform 82 selbst besitzt ebenfalls eine Heiß- bzw. Kühleinrichtung 83. Eine Platte 87 mit durchgehenden Hohlräumen 88 ist im Einsatz 80 positioniert. Wiederum sind die durchgehenden Hohlräume 88 der Platte 87 und die Dorne 89 lediglich in der linken Bildhälfte dargestellt.

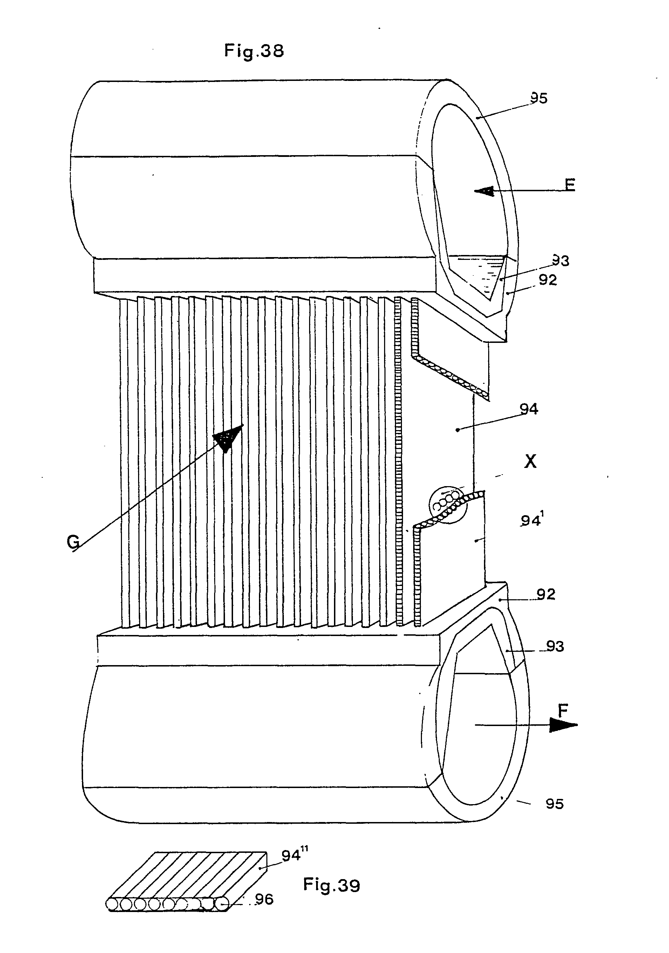

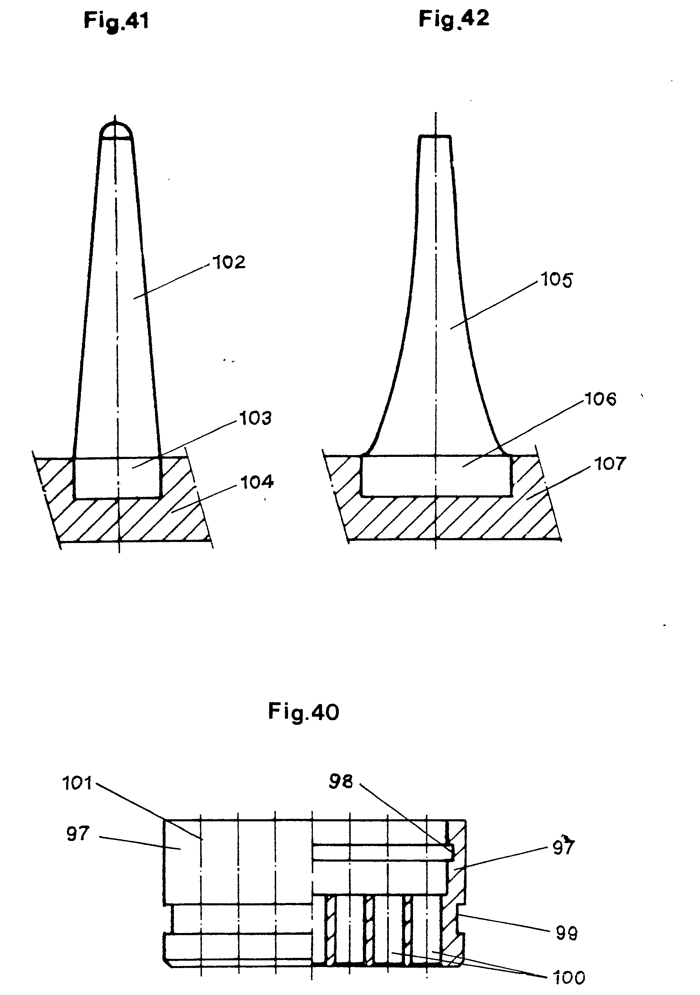

In der Figur 38 ist schematisch ein Rohrplatten-Wärmeaustauscher, hergestellt nach dem erfindungsgemäßen Verfahren und versehen mit zwei Rohranschlüssen, dargestellt. Die Rohrgruppenplatten 94 sind an beiden Enden über den Spritzgußwerkstoff 93 mit je einem Einsatz 92 verbunden, an welchen jeweils ein Halbrohr 95 angeschweißt ist. Die vorderste Rohrplatte 94' ist in der schematischen, perspektivischen Darstellung gemäß Figur 39 aufgeschnitten, um deutlich zu machen, daß diese Rohrplatte 94 jeweils eine größere Anzahl von durchgehenden Hohlräumen aufweisen, wie an der Bruchkante der Rohrplatte 94' erkennbar wird. Durch die Einzelheit X, die in Figur 39 dargestellt wird, wird der Aufbau der Rohrplatte 94' noch verdeutlicht, wobei der Ausschnitt der Rohrplatte mit 94'' und die durchgehenden Hohlräume mit 96 bezeichnet sind.

Der in Figur 38 perspektivisch dargestellte Rohrplatten-Wärmeaustauscher, der nach dem erfindungsgemäßen Verfahren hergestellt wurde, eignet sich vorzüglich zum Erwärmen bzw. Kühlen von gasförmigen Medien, beispielsweise Luft. Durch die obere Röhre, die durch die Halbröhre 95, den Einsatz 92 und das thermoplastische Polymere 93 gebildet ist, kann in Pfeilrichtung E ein Kühl- bzw. Heizmedium in Pfeilrichtung E geleitet werden, welches dann durch die durchgehenden Hohlräume 96 der Rohrgruppenplatten 94 in die untere Röhre gelangt und aus dieser in Pfeilrichtung F abströmt. Ein Gasstrom, der in Pfeilrichtung G durch die Platten hindurchgeblasen wird, kann erwärmt bzw. gekühlt werden. Ebenso kann das Medium, welches in Pfeilrichtung E ein- und in Pfeilrichtung F abströmt, durch den Gasstrom (Pfeilrichtung G) gekühlt bzw. erhitzt werden.

Figur 40 zeigt schematisch den Aufbau eines Einsatzes 97 mit umlaufender Nut 98 auf der Innenseite und umlaufender Nut 99 auf der Außenseite des Einsatzes 97. Ein solcher Einsatz 97 kann beispielsweise in eine Spritzgießform gemäß Figur 1 eingesetzt werden. Der Einsatz 97 ist auf der rechten Bildhälfte im Schnitt und auf der linken Bildhälfte in Draufsicht dargestellt. Die durchgehenden Hohlräume sind im Schnitt dargestellt und mit 100 bezeichnet. In der Draufsicht wurde die Lage weiterer durchgehender Hohlräume mit strichpunktierten Linien 101 vermerkt. Durch die umlaufende Nut 98 auf der Innenseite des Einsatzes 97 wird nach dem Spritzgießen und Aushärten des thermoplastischen Materials ein sicherer Schutz gegen axiales Verschieben desselben gewährleistet. Die außen umlaufende Nut 99 dient einmal der Sicherung des Einsatzes 97 in der Spritzgießform gegen axiales Verschieben, zum anderen kann diese Nut für Dichtzwecke Verwendung finden, wenn beispielsweise der mit den Rohren verbundene Einsatz in ein Gehäuse eingeschoben ist.

Figur 41 zeigt einen Dorn 102, dessen freies Ende konisch ausgebildet ist. Die Spitze des freien Endes ist abgestumpft und hier halbkugelförmig dargestellt. Das andere Ende 103 des Dorns 102 ist zylindrisch ausgebildet und in den Boden 104 einer nur auszugsweise dargestellten Spritzgießform eingelassen.

Figur 42 zeigt einen Dorn 105, dessen Querschnitt zum freien Ende hin ebenfalls abnimmt. Die äußere Kontur kann als Parabel-Kurve angesehen werden. Der Dorn 105 ist mit seinem zylindrischen Ende in einen ausschnittsweise dargestellten Boden 107 eingelassen. Da nach dem Spritzgießvorgang die Innenseite der Rohre und/oder der thermoplastische Werkstoff die Form der Dorne annehmen, ist leicht einzusehen, daß die Ausbildung des Dorns 105, wie er in Figur 42 dargestellt ist, immer dann günstig ist, wenn im fertigen Stoff- und/oder Wärmetauscher besonders günstige Strömungsverhältnisse herrschen sollen.

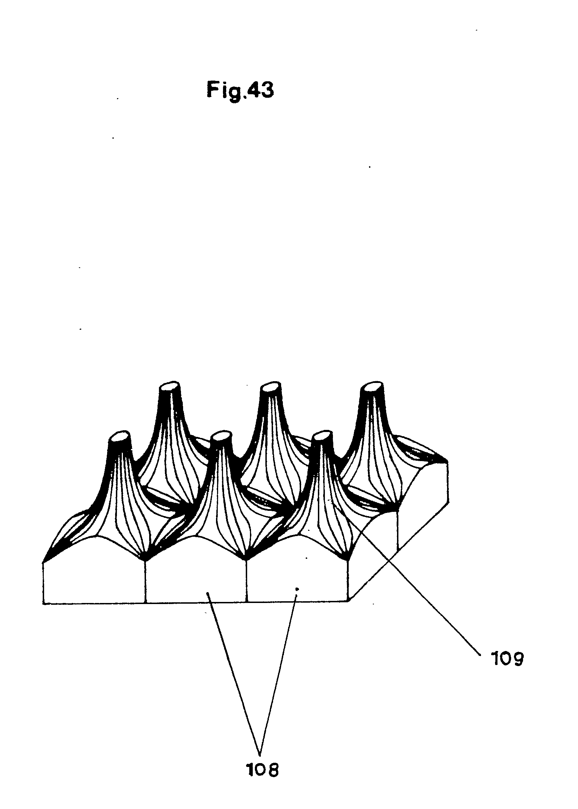

Um viele nebeneinanderliegende zylindrische Bohrungen im Boden der Spritzgießform zu vermeiden, kann das hintere Ende 108 der Dorne 109 einen quadratischen Querschnitt aufweisen, so daß mehrere gleiche Dorne nebeneinandergelegt werden können, welche dann gemeinsam im Boden einer Spritzgießform eingelassen sein können. Eine derartige Anordnung ist mit sechs Dornen 109 in Figur 43 dargestellt. Für das hintere Ende der Dorne 109 bieten sich auch andere Querschnitte, beispielsweise sechseckige oder rechteckige Querschnitte an. Auf diese Weise lassen sich die Einströmungskanäle in die Rohre strömungstechnisch günstig formen.

Beispiel 1

In der Figur 1 ist eine erfindungsgemäße Vorrichtung zum Herstellen von Rohrböden in zusammengebautem Zustand dargestellt. Hierbei ist mit 1 die Oberform und mit 2 die Unterform bezeichnet. In die Unterform 2 ist ein zylindrischer Einsatz 3 eingesetzt, dessen Boden für jedes Rohr eine durchgehende Öffnung 10 aufweist, wobei in der schematischen Darstellung der Figur lediglich eine durchgehende Öffnung dargestellt ist. In die Öffnung 10 des zylindrischen Einsatzes 3 ist ein poröses Polypropylen-Rohr in den Abmessungen 5,5/8,6 mm $\emptyset$ bis zur Oberkante des zylindrischen Einsatzes 3 eingeführt. Hierbei ist es von Vorteil, wenn die durchgehenden Öffnungen des zylindrischen Einsatzes der Unterform gegenüber dem Außendurchmesser der Rohre, die vor dem Spritzgießvorgang in die durchgehenden Öffnungen des zylindrischen Einsatzes eingeführt werden, eine Spielpassung aufweisen. Der Begriff Spielpassung ist in DIN 7182, Blatt 2, definiert. Ebenso ist es zweckmäßig, daß die Außendurchmesser der Dorne gegenüber dem Innendurchmesser der Rohre eine Spielpassung aufweisen. Ein Rohr, Pos. 8, ist im Bereich des zylindrischen Einsatzes im Schnitt, und im unteren Bereich der Unterform 2 ungeschnitten dargestellt. Weitere Rohre 8 sind, wie beispielsweise in der Figur angedeutet, längs den strichpunktierten Linien 11 eingesetzt.

Die Oberform 1 besteht aus einem Halter 4, Werkstoff Nr. 1.2419, in welchen der Kühlmittelverteiler 5, Werkstoff-Nr. 1.2419 und ein Dornhalter 6, Werkstoff-Nr. 1.2419, eingesetzt ist. Halter 4, Kühlmittelverteiler 5 und Dornhalter 6 können beispielsweise durch Schrauben miteinander verbunden sein, die an einem Platz, der durch strichpunktierte Linie 13 gekennzeichnet ist, angeordnet sind.

In den Dornhalter 6 sind Dorne 7, Werkstoff HWS, eingesetzt, die eine durchgehende Bohrung von 2 mm Durchmesser aufweisen. Der Übersichtlichkeit halber ist lediglich ein Dorn 7 dargestellt, wobei beispielsweise längs der strichpunktierten Linien 11 weitere Dorne 7 angeordnet sein können. Das freie Ende des Dornes 7 ist pyramidenstumpfförmig (15°) ausgebildet. Die Länge der Dorne ist derart festgelegt, daß das freie Ende der Dorns 15 mm in die Öffnung des Einsatzes 3 hineinragt, so daß die aus der Oberform herausragende Länge der Dorne größer ist, als die Dicke des herzustellenden Rohrbodens. Die Dicke des Polypropylen-Rohrbodens beträgt im beschriebenen Beispiel 0,2·D.

Über den Kühlmittelzufluß – in der Figur mit Pfeil B dargestellt – und über den Kühlmittelverteiler 5 wird in die durchgehenden Hohlräume der Dorne 7 Kühlmedium (Luft 18 °C, Vordruck 0,8–1,0 bar) zugeführt, welches sich nach Verlassen der Dorne in die Rohre 8 ergießt und am rückwärtigen Ende der Rohre ausfließt.

Der Einsatz 3 weist an der äußeren Oberfläche eine Nut 9 von 44 mm Breite, 2 mm Tiefe auf, in welche die Unterform 2 eingreift, um eine axiale Festlegung des Einsatzes 3 zu erreichen. Um den Einsatz 3 in die Unterform einsetzen zu können, ist die Unterform 2 zweiteilig ausgebildet (in der Figur nicht dargestellt).

In die Oberform 1 ist ein Anspritzkanal 12 eingearbeitet, durch welchen das erschmolzene Polypropylen-Material zur Herstellung des Rohrbodens in Richtung des Pfeiles A in den von dem Einsatz 3, den Dornhalter 6 (Oberform) und den Rohren 8 gebildeten Innenraum 15 unter einem Druck von 40 bar, bei einer Temperatur von 235 °C eingepreßt wird. Bis zur Abkühlung des eingespritzten Polypropylen-Materials unter die Schmelzpunkttemperatur ist ein Nachhaltedruck von 15 bar erforderlich. Das plastifizierte Polypropylen-Material ist zur Reduzierung des Schrumpfverhaltens mit 30% Glasfasern gefüllt. Der Schmelzindex des verwendeten Polypropylens beträgt (nach MFI 230–5) 9 g/10 min, die Kristallitschmelztemperatur 160–166 °C, der Schmelzpunkt 230–240 °C.

Im Halter 4 der Oberform 1 sind Bohrungen 13 und in der Unterform 2 Bohrungen 14 vorgesehen, durch welche Kühl- oder Heizmittel zum Temperieren der Spritzgießform geleitet werden können. Vor dem ersten Spritzvorgang wird die Gießform mit Hilfe des flüssigen Heizmediums durch die Kanäle 13 und 14 auf eine Arbeitstemperatur von 70 °C gebracht. Diese Temperatur wird während des gesamten Spritzgießverfahrens konstant gehalten.

Nach erfolgtem Spritzgießvorgang wird die geteilte Spritzgießform auseinandergefahren und der mit einem Rohrboden versehene Einsatz 3 der Form entnommen.

Beispiel 2 (Vergleichsbeispiel)

Eine Spritzgießform aus Chromstahl besteht aus einer Ober- und einer Unterform, die zusammengesetzt einen rechtwinkeligen Quader bilden, der 200 mm lang, 150 mm breit und 50 mm hoch ist. Die Höhe der Unterform beträgt 30 mm, die Höhe der Oberform 20 mm.

In die Unterform ist eine ebenfalls etwa rechteckige Vertiefung eingearbeitet, welche 5 mm tief ist und deren Oberkanten zu den Außenkanten der Unterform jeweils 50 mm Abstand aufweist. Im Boden dieser Vertiefung, welche eine Oberfläche von 100mal 50 mm² aufweist, sind in 28 Reihen je 20 Dorne eingelassen. Jede Reihe ist parallel zur kurzen Seite der Vertiefung angeordnet. Der Mittenabstand benachbarter Reihen beträgt 3,4 mm, der Mittenabstand benachbarter Dorne innerhalb einer Reihe beträgt 2 mm. Die Reihen und die Dorne innerhalb jeder Reihe sind in Bezug auf die Außenkanten der Vertiefung zentrisch angeordnet.

Jeder Dorn ist 30 mm lang und wies ursprünglich eine zylindrische Form mit einem Außendurchmesser von 1,7 mm auf. Vor- und Rückseite dieser Dorne sind auf eine Stärke von 1,2 mm abgeplattet worden, wobei die abgeplatteten Flächen parallel zu den Reihen angeordnet sind. Die obersten 3 mm der Dorne, die am weitesten vom Boden der Vertiefung entfernt sind, sind konisch verjüngt.

In der Oberform sind 28 Schlitze mit einem Mittenabstand von 3,4 mm angeordnet. Die Länge jedes Schlitzes beträgt 95 mm, die Breite 1,5 mm. Die Schlitze sind derart angeordnet, daß sie von der einen Seite durchgehen bis auf einen Abstand von 55 mm der anderen Seite, so daß die Oberform wie eine Art Kamm aussieht. Ein Seitenblock der ebenfalls die Form eines Kammes aufweist, mit 28 Zähnen, die einen Mittenabstand von 3,4 mm voneinander haben, wird von der Seite her derart seitlich in die Oberform eingeschoben und fixiert, daß die Zähne des Seitenblocks in den Schlitzen der Oberform angeordnet sind. Die Breite jedes Zahnes des Seitenblockes ist 1,45 mm, die Länge 55 mm und die Höhe 20 mm, so daß beim Zusammenstecken des Seitenblocks mit der Oberform jeweils schlitzförmige, durchgehende Öffnungen von 40 mm Länge offen bleiben in welchen beim Aufsetzen der Oberform auf die Unterform die Spitzen der Dorne positioniert sind.

Rohrplatten aus Polyvinylidenfluorid mit einer äußeren Breite von 39,9 mm und einer äußeren Dicke von 1,4 mm in welchen 20 durchgehende Öffnungen (Kanäle) mit rechteckigem Querschnitt mit abgerundeten Ecken (größte Länge 1,75 mm, größte Breite 1,25 mm, Abrundung: r = 0,2 mm) angeordnet sind, werden nun derart auf die Dorne jeweils einer Reihe gesteckt, daß die Rohrplatten auf den Boden der in der Unterform eingearbeiteten Vertiefung aufstoßen.

Nun wird die Spritzgießform auf eine Temperatur von 25 °C gebracht. Durch einen Einspritzkanal, welcher in die Spritzgießform parallel zur Längsseite der Vertiefung eingearbeitet ist, wird Polyvinylidenfluorid ($T_m$ = 176 °C, das eingesetzte PVDF ist neben diesem Schmelzpunkt, durch einen Schmelzindex gemäß ISO-Norm 1133 charakterisiert. Dieser Schmelzindex nimmt den Wert 5.5 bei 235 °C und den Wert 10.0 bei 270 °C ein. – Die letztgenannte Temperatur ist für Beispiel 7 von Bedeutung →) als Schmelze eingespritzt, wobei die Schmelz beim Einströmen in die Vertiefung eine Temperatur von 235 °C aufweist. Nachdem die Spritzgießform vollständig mit Schmelze gefüllt ist, wird der auf die Schmelze aufgebrachte Druck auf 30 bar gehalten, bis die Temperatur der eingespritzten Schmelze auf 160 °C gesunken ist.

Nach vollständiger Abkühlung und Erstarrung der Schmelze wird der nunmehr entstandene Rohrboden mit den mit diesem Rohrboden verbundenen Rohrplatten der Spritzgießform entnommen.

Dieser aus Schmelze geformte Rohrboden ist vom Volumen her etwa 4% kleiner als das Volumen der Vertiefung in der Unterform. Aufgrund dieses Volumenschrumpfes beim Erstarren der Schmelze werden die Rohrplatten derartig im Rohrboden verspannt, daß die Oberfläche der Rohrplatten an der Stelle, an der die Rohrplatten aus dem Rohrboden heraustreten, eine gewellte bzw. faltige Oberfläche aufweisen. Der Innendruck, bei dem normalerweise die Zwischenwände der (noch nicht vergossenen) Rohrplatten innerhalb 60 Sekunden bersten, beträgt bei 20°C etwa 28 bar. Wenn die Rohrplatten in der beschriebenen Weise vergossen sind, bersten die Zwischenwände jedoch bereits bei einem Druck von 6 bar innerhalb von 60 Sekunden.

Beispiel 3 (Vergleichsbeispiel)

Es wird wie in Beispiel 2 verfahren. Lediglich die Temperatur der Spritzgießform und somit auch die Temperatur der Rohrplatten wird mit Hilfe eines Heizmediums (Öl) auf 65°C erhöht, bevor die PFDF (Polyvinylidenfluorid)-Schmelze in die Vertiefung eingespritzt wird. Das Heizmedium wird zu diesem Zweck durch in der Spritzgießform vorgesehenen Kanäle gepumpt.

Der hieraus entstandene Rohrboden, mit dem die Rohrplatten verbunden sind, weist nunmehr einen Volumenschrumpf von 4,6% auf. Die Rohrplatten sind an der Austrittsstelle aus dem Rohrboden wiederum gewellt bzw. faltig. Der Druck, bei dem die Rohrplatten innerhalb von 60 Sekunden bersten, beträgt wiederum etwa 6 bar.

Beispiel 4

In die Oberform gemäß Beispiel 2, in die bereits der Seitenblock eingeschoben und befestigt ist, wird eine Vertiefung von 3 mm Tiefe, 102 mm Länge und 52 mm Breite eingearbeitet. In diese Vertiefung wird ein Einsatz aus PDVF gelegt, wobei der Einsatz 3 mm dick, 101 mm lang und 51 mm breit ist. Der Einsatz weist entsprechend der Anordnung der Dorne 28 Schlitze auf, die in Bezug auf die durch die Oberform und den Seitenblock gebildeten Schlitze deckungsgleich und nach dem Einsetzen fluchtend angeordnet sind.

Nachdem die Spritzgießform mit dem Einsatz zusammengesetzt und die Rohrplatten in der in Beispiel 1 beschriebenen Weise aufgesteckt sind, wird die Spritzgießform auf 25°C erwärmt, und dann Schmelze aus PVDF mit einer Temperatur von 235°C in die Vertiefung der Unterform eingespritzt, bis ein Druck von 30 bar erreicht ist. Nunmehr wird die Spritzgießform bei diesem Druck auf 160°C abgekühlt. Nach vollständiger Abkühlung wird der Einsatz, der nunmehr über den Spritzgießwerkstoff mit den Rohrplatten verbunden ist, der Spritzgießform entnommen.

Der Volumenschrumpf des Rohrbodens beträgt nunmehr lediglich 2,3% bezüglich des Volumens der Vertiefung der Unterform. Die Rohrplatten weisen an keiner Stelle irgendwelche Wellungen oder Falten auf, und der Druck, bei dem die Rohrplatten innerhalb 60 Sekunden bersten, beträgt nunmehr etwa 28 bar.

Wenn man versucht, die Rohrplatten aus dem aus dem Einsatz und dem Spritzgießwerkstoff gebildeten Rohrboden wieder herauszuziehen, muß hierzu eine Zugkraft von etwa 250 N pro Rohrplatte angewandt werden.

Beispiel 5

Beispiel 4 wird wiederholt, wobei jedoch die Temperatur der Spritzgießform, und somit die Temperatur des Einsatzes der Rohrplatten auf 65°C eingestellt wird, bevor der Spritzgießwerkstoff eingespritzt wird.

Nach Entnahme aus der Spritzgießform des aus Rohrplatten, Einsatz und Spritzgießwerkstoff gebildeten Teiles kann festgestellt werden, daß der Volumenschrumpf 2,2% und der Berstdruck wiederum 28 bar beträgt, während keine der Rohrplatten selbst bei einer Zugkraft von 1350 N aus dem Rohrboden herausgezogen werden kann.

Beispiel 6

Beispiel 4 wird wiederholt, wobei jedoch die Temperatur des Spritzgießwerkzeugs auf 110°C eingestellt wird, während die Temperatur des Einsatzes und der Rohrplatten in einem separaten Ofen soweit erhöht worden ist, daß sie nach dem Einbau in das Spritzgießwerkzeug dann noch eine Temperatur von 145°C aufweisen, wenn der Spritzgießwerkstoff eingespritzt wird.

Wenn das Spritzgießwerkzeug gekühlt ist, wird der Druck, womit der Werkstoff eingespritzt ist, von 30 bar auf 15 bar gesenkt, nach 15 Sekunden jedoch auf 40 bar erhöht und 15 Sekunden auf diesem Druck belassen, wonach der Druck auf 0 bar gesenkt wird.

Durch dieses Verfahren ist es möglich, in das Spritzgießwerkzeug nach dem Kühlen Spritzgießwerkstoff nachzufüllen, wodurch der Schrumpf des zuerst eingebrachten Materials kompensiert wird.

Nach Entnahme aus dem Spritzgießwerkzeug des aus Rohrplatten, Einsatz und Spritzgießwerkstoff gebildeten Teils kann festgestellt werden, daß der Volumenschrumpf des Spritzgießwerkstoffs nur noch 2% ist, während der Berstdruck wiederum 28 bar beträgt. Keine der Rohrplatten konnte selbst bei einer Zugkraft von 1350 N aus dem Rohrboden herausgezogen werden.

Beispiel 7

Es werden die Bedingungen des Beispiels 5 eingehalten, wobei jedoch die Einspritz-Temperatur der PVDF-Schmelze auf 270°C erhöht wird. Beim Einspritzen der Schmelze tritt bei dem zu erreichenden Druck von 30 bar aus den Schlitzen der Oberform (zwischen Schlitzwand und Außenwand der Rohrplatten) Schmelze aus.

Dennoch weist das nach diesem Verfahren hergestellte Produkt wiederum einen Berstdruck von 28 bar auf. Die Rohrplatten können mit einer Zugkraft von etwa 1000 N nicht aus dem Rohrboden herausgezogen werden. Bei einer Zugkraft-Beaufschlagung von 1000 N kann eine Versenkung (Längung) bei einigen Rohrplatten im Bereich der Schmelz-Austrittsstelle beobachtet werden. An diesen Platten ist eine solche Menge an Polymer ausgetreten, daß dieses mit den Rohrplatten in einem Bereich, in dem die Rohrplatten nicht mehr durch die Dorne unterstützt waren, in Kontakt kam, wodurch die Rohrplatten stark verformt wurden, und teilweise Blasen in den Wänden aufwiesen.

Dieses Beispiel zeigt, daß eine zu hoch gewählte Temperatur der Schmelze ein Gelingen des erfindungsgemäßen Verfahrens in Frage stellen kann. Ein Austreten der Schmelze durch die Schlitze kann bei den angegebenen Temperaturen aber dadurch vermieden werden, daß die Abmessungen der Rohrplatten und der Schlitze des Einsatzes derart aufeinander abgestimmt werden, daß der Spalt zwischen Rohrplatte und Schlitzwandung verringert ist (beispielsweise Rohrplattendicke 1,45 mm, Schlitzbreite 1,5 mm).

Beispiel 8

Beispiel 4 wird wiederholt, wobei jedoch die Temperatur des Spritzgießwerkzeugs und die Temperatur des Einsatzes der Rohrplatten auf 80 °C eingestellt wird, bevor der Spritzgießwerkstoff, welchem 20% Phlogopit (Mica) gleichmäßig verteilt zugefügt wurde, eingespritzt wird. Die größte Dimension der Mica-Plättchen war $300 \cdot 10^{-6}$ m.

Nach Entnahme aus dem Spritzgießwerkzeug des aus Rohrplatten, Einsatz und Spritzgießwerkstoff gebildeten Teils kann festgestellt werden, daß der Volumenschrumpf des Spritzgießwerkstoff ebenfalls 2% war, während der Berstdruck wiederum 28 bar betrug. Keine der Rohrplatten konnte selbst bei einer Zugkraft von 1350 N aus dem Rohrboden herausgezogen werden.

**Patentansprüche**

1. Verfahren zum Herstellen von Wärme- und/oder Stoffaustauschern, die Rohre aus Kunststoff, vorzugsweise aus thermoplastischem Kunststoff, enthalten, mittels Spritzgießen eines thermoplastischen Werkstoffes mit Hilfe einer aus mindestens zwei Teilen, beispielsweise einer Ober- und Unterform (1, 2) bestehenden Spritzgießform und in die Rohre einbringbaren Dornen (7), dadurch gekennzeichnet, daß in den ersten Teil der Spritzgießform (Ober- oder Unterform) ein vorzugsweise aus Kunststoff bestehender, vorzugsweise über Anschmelzen mit den Rohren verbindbarer Einsatz (3), dessen Boden für jedes Rohr eine durchgehende Öffnung aufweist, als Positionierungselement für die Rohre derart eingesetzt wird, daß der Einsatz wenigstens teilweise formschlüssig in dem ersten Teil der Spritzgießform angeordnet ist, daß in jede Öffnung des Einsatzes ein Rohr (8) eingesetzt wird, daß in jedes Rohr ein Dorn eingesetzt wird, wonach die Spritzgießform derart geschlossen wird, daß gegebenenfalls die Dorne im zweiten Teil der Spritzgießform (Unter- bzw. Oberform) kraft- und/oder formschlüssig positioniert sind, daß das erschmolzene thermoplastische Material über einen in die Spritzgießform eingearbeiteten Anspritzkanal (12) in den von der Spritzgießform, dem Einsatz und den Rohrenden gebildeten Hohlraum eingespritzt wird, daß nach dem Erkalten des beim Abkühlen wenigstens anfänglich noch unter Druck gehaltenen thermoplastischen Materials die Teile der Spritzgießform auseinandergebracht, die Dorne entfernt und die über den thermoplastischen Werkstoff mit dem Einsatz verbundenen Rohre dem ersten Teil der Spritzgießform entnommen werden, und daß dann gegebenenfalls über die Spritzgießform die freien Enden der Rohre ebenfalls mit einem zweiten Einsatz verbunden werden.

2. Verfahren nach Anspruch 1, dadurch gekennzeichnet, daß das erschmolzene Material unter hohem Druck in den von der Spritzgießform, dem Einsatz und den Rohrenden gebildeten Hohlraum eingespritzt wird.

3. Verfahren nach Anspruch 1 oder 2, dadurch gekennzeichnet, daß in jede Öffnung des Einsatzes ein Rohr derart eingesetzt wird, daß das Rohrende innen aus dem Boden des Einsatzes herausragt.

4. Verfahren nach einem der Ansprüche 1 bis 3, dadurch gekennzeichnet, daß zum Erkalten des thermoplastischen Materials die Spritzgießform temperiert wird.

5. Verfahren nach einem der Ansprüche 1 bis 4, dadurch gekennzeichnet, daß während und/oder nach dem Spritzgießvorgang die Dorne gekühlt werden.

6. Verfahren nach Anspruch 5, dadurch gekennzeichnet, daß die Dorne durchgehende Hohlräume aufweisen, durch welche zur Kühlung der Dorne ein Kühlmedium hindurchgeleitet wird.

7. Verfahren nach Anspruch 6, dadurch gekennzeichnet, daß als Kühlmedium ein Gas, vorzugsweise Luft verwendet wird.

8. Verfahren nach einem der Ansprüche 1 bis 7, dadurch gekennzeichnet, daß zunächst mehrere Rohre zu Rohrgruppen verbunden werden, und die Rohrgruppen in entsprechende durchgehende Öffnungen des Einsatzbodens eingesetzt werden.

9. Verfahren nach Anspruch 8, dadurch gekennzeichnet, daß die Rohre achsparallel oder nahezu achsparallel derart zu Rohrgruppen zusammengefaßt werden, daß der Querschnitt der Rohrgruppen senkrecht zur Achse der Rohre die Form einer Platte, beispielsweise einer ebenen, profilierten oder spiraligen Platte aufweist.

10. Verfahren nach Anspruch 8 oder 9, dadurch gekennzeichnet, daß jeweils 20 bis 2 000, vorzugsweise 20 bis 100 Rohre zu Rohrgruppen zusammengefaßt werden.

11. Verfahren nach einem der Ansprüche 1 bis 10, dadurch gekennzeichnet, daß Rohre aus nicht porösem Material oder aus porösem Material mit einem Porenvolumen von bis zu 90% eingesetzt werden, deren hydraulischer Durchmesser $d_h$ zwischen 0,5 bis 25 mm, vorzugsweise 0,8 bis 15 mm liegt.

12. Verfahren nach Anspruch 11, dadurch gekennzeichnet, daß die Wandstärke der Rohre an der dünnsten Stelle einen Wert von etwa 5 bis 25% des hydraulischen Durchmessers aufweist.

13. Verfahren nach Anspruch 11 oder 12, dadurch gekennzeichnet, daß Rohre aus nicht porösem Material oder aus porösem Material mit einem Porenvolumen von weniger als 50% eingesetzt werden, deren hydraulischer Durchmesser $d_h$ zwischen 0,5 und 5 mm, vorzugsweise zwischen 0,8 und 3 mm liegt.

14. Verfahren nach Anspruch 13, dadurch gekennzeichnet, daß die Wandstärke der Rohre an der dünnsten Stelle einen Wert von etwa 7,5 bis 17,5% des hydraulischen Durchmessers $d_h$ aufweist.

15. Verfahren nach einem der Ansprüche 1 bis 4, dadurch gekennzeichnet, daß mindestens in den Bereichen, in denen die Verbindung untereinander erfolgt, die Rohre, die Einsätze und das thermoplastische Material aus thermoplastischen Polymeren bestehen, die von ihrer Grundstruktur zu derselben Polymersorte gehören.

16. Verfahren nach einem der Ansprüche 1 bis 15, dadurch gekennzeichnet, daß mindestens in den Bereichen, in denen die Verbindung untereinander erfolgt, die Rohre, die Einsätze und das thermoplastische Material aus thermoplastischen Polymeren bestehen, die denselben oder nahezu denselben Schmelzpunkt bzw. Schmelzbereich aufweisen.

17. Verfahren nach Anspruch 15 oder 16, dadurch gekennzeichnet, daß mindestens die Rohre vor dem Einspritzen des thermoplastischen Materials auf eine Temperatur $T_c$ erwärmt werden, die unterhalb der Schmelzpunkttemperatur bzw. der gemittelten Temperatur des Schmelzbereiches $T_m$ des Röhrenwerkstoffes liegt, daß weiterhin das zu erhitzende thermoplastische Material auf eine Temperatur $T_i$ erhitzt wird, die größer ist als $T_m$, und daß die Temperaturunterschiede $T_i-T_m$ und $T_m-T_c$ derart gewählt werden, daß beim Einspritzen der Schmelze die Rohre kurzfristig so hoch erhitzt werden, daß diese im Bereich der Öffnungen des Einsatzes mindestens über eine Länge, die der Wandstärke der Rohre entspricht, mit dem Einsatz fest verschmelzen.

18. Verfahren nach Anspruch 17, dadurch gekennzeichnet, daß die Temperaturunterschiede $T_i-T_m$ und $T_m-T_c$ derart gewählt wurden, daß beim Einspritzen der Schmelze die Rohre kurzfristig so hoch erhitzt werden, daß diese über etwa den gesamten Längenbereich der Öffnungen des Einsatzes mit dem Einsatz verschmelzen.

19. Verfahren nach Anspruch 17 oder 18, dadurch gekennzeichnet, daß der Temperaturunterschied $T_i-T_m$ zwischen 20 und 90 °C, vorzugsweise zwischen 30 und 70 °C gewählt wird.

20. Verfahren nach einem der Ansprüche 17 bis 19, dadurch gekennzeichnet, daß der Temperaturunterschied $T_m-T_c$ mindestens gleich $T_i-T_m$ und höchstens gleich $T_m-40$ °C gewählt wird.

21. Verfahren nach einem der Ansprüche 6 bis 20, dadurch gekennzeichnet, daß die gewählten Temperaturen der Rohre während und nach dem Einspritzen der Schmelze über ein Gas, welches durch die Hohlräume der Dorne geleitet wird, eingestellt werden.

22. Verfahren nach einem der Ansprüche 1 bis 21, dadurch gekennzeichnet, daß das thermoplastische Material der Rohre, der Einsätze und das Spritzmaterial aus spritzgießbaren (Co-)polymer auf Basis einer Fluorkohlenstoffverbindung, wie PVDF, besteht.

23. Verfahren nach einem der Ansprüche 1 bis 21, dadurch gekennzeichnet, daß das thermoplastische Material der Rohre, der Einsätze und das Spritzmaterial aus Polypropylen besteht.

24. Verfahren nach einem der Ansprüche 1 bis 21, dadurch gekennzeichnet, daß das thermoplastische Material der Rohre, der Einsätze und das Spritzmaterial aus Polyäthylen besteht.

25. Verfahren nach einem der Ansprüche 1 bis 21, dadurch gekennzeichnet, daß das thermoplastische Material der Rohre, der Einsätze und das Spritzmaterial aus Polybisphenolcarbonat besteht.

26. Vorrichtung zum Herstellen von Wärme- und/oder Stoffaustauschern, die Rohre enthalten, mit einer aus mindestens zwei Teilen bestehenden Spritzgießform zur Durchführung des Verfahrens gemäß einem der Ansprüche 1 bis 25, dadurch gekennzeichnet, daß im ersten Teil (2, 71, 81) der Spritzgießform ein Einsatz (3, 70, 80) zur Positionierung von Dornen (7, 79, 89) mindestens teilweise formschlüssig angeordnet ist, daß der erste Teil (2, 71, 81) der Spritzgießform für alle Rohre eine gemeinsame Öffnung und der Einsatz (3, 70, 80) für jedes Rohr eine durchgehende Öffnung aufweist, deren Innenabmessung der Außenabmessung des jeweiligen Rohres entspricht, und daß der zweite Teil (1, 72, 82) der Spritzgießform Einrichtungen zur Aufnahme einer Anzahl von Dornen (7, 79, 89), deren Außenabmessung denen der Innenabmessung des jeweiligen Rohres und deren Anzahl der der Rohre des herzustellenden Wärme- und/oder Stoffaustauschers entspricht, enthält, und daß in die Spritzgießform ein Anspritzkanal (12, 74, 84) eingearbeitet ist.

27. Vorrichtung nach Anspruch 26, dadurch gekennzeichnet, daß die Dorne (7, 79, 89) im zweiten Teil (1, 72, 82) der Spritzgießform befestigt sind.

28. Vorrichtung nach Anspruch 26 oder 27, dadurch gekennzeichnet, daß der erste und/oder der zweite Teil der Spritzgießform eine Temperiervorrichtung (13/14, 73, 83) enthält.

29. Vorrichtung nach einem der Ansprüche 26 bis 28, dadurch gekennzeichnet, daß der erste und/oder der zweite Teil der Spritzgießform eine Heizvorrichtung enthält.

30. Vorrichtung nach einem der Ansprüche 26 bis 29, dadurch gekennzeichnet, daß die Dorne (7, 89) je einen durchgehenden Hohlraum aufweisen, wobei alle Hohlräume der Dorne im zweiten Teil (1, 82) der Spritzgießform mit einem Mediumverteiler verbunden sind.

31. Vorrichtung nach einem der Ansprüche 26 bis 30, dadurch gekennzeichnet, daß der Einsatz (3, 70, 80) im ersten Teil der Spritzgießform aus einem thermoplastischen Polymeren besteht.

32. Vorrichtung nach einem der Ansprüche 26 bis 31, dadurch gekennzeichnet, daß alle Teile der Spritzgießform mit Ausnahme des Einsatzes aus Metall bestehen.

33. Vorrichtung nach einem der Ansprüche 26 bis 32, dadurch gekennzeichnet, daß die durchgehenden Öffnungen des Einsatzes gegenüber den Außenabmessungen der Rohre eine Spielpassung aufweisen.

34. Vorrichtung nach einem der Ansprüche 26 bis 33, dadurch gekennzeichnet, daß die Außenabmessungen der Dorne gegenüber den Innenabmessungen der Rohre eine Spielpassung aufweisen.

35. Vorrichtung nach einem der Ansprüche 26 bis 34, dadurch gekennzeichnet, daß die Dorne (7, 79, 89) an dem freien Ende verjüngt ausgebildet sind.

36. Vorrichtung nach einem der Ansprüche 26 bis 35, dadurch gekennzeichnet, daß die Länge der Dorne (7, 79, 89) derart gewählt ist, daß sie bei zusammengebauter Spritzgießform aus den Öffnungen des Einsatzes (3, 70, 80) herausragen.

37. Vorrichtung nach einem der Ansprüche 26 bis 36, dadurch gekennzeichnet, daß die Dorne (7) mit Ausnahme des Abschnitts, welcher vom zweiten Teil (1) der Spritzgießform aufgenommen wird, zum freien Ende hin geringfügig konisch ausgebildet sind.

38. Vorrichtung nach einem der Ansprüche 26 bis 36, dadurch gekennzeichnet, daß die Dorne mit Ausnahme des Abschnitts, welcher vom zweiten Teil der Spritzgießform aufgenommen wird, zum freien Ende hin einen abnehmenden Durchmesser aufweisen.

39. Vorrichtung nach einem der Ansprüche 26 nis 38, dadurch gekennzeichnet, daß der Einsatz (97) auf seiner Innenseite mindestens eine umlaufende Nut (98) aufweist.

40. Vorrichtung nach einem der Ansprüche 26 bis 39, dadurch gekennzeichnet, daß die durchgehenden Öffnungen des Einsatzes (70, 80) derart ausgebildet sind, daß sie jeweils eine aus mehreren Einzelrohren zusammengefaßte Rohrgruppe (77, 87) aufnehmen können.

## Claims

1. Process for the production of heat and/or mass exchangers, which contain tubes of plastic, preferably of thermoplastic, by means of injection-moulding of a thermoplastic material with the aid of an injection mould consisting of at least two parts, for example of an upper and lower mould (1, 2), and mandrels (7) which can be introduced into the tubes, characterized in that an insert (3), which preferably consists of plastic, can preferably be joined to the tubes by fusion and the bottom of which has a continuous opening for each tube, is inserted into the first part of the injection mould (upper or lower mould) as positioning element for the tubes, in such a way that the insert is arranged at least partially positively in the first part of the injection mould, in that a tube (8) is inserted into each opening of the insert, in that a mandrel is inserted into each tube, after which the injection mould is closed in such a way that, if appropriate, the mandrels are positioned non-positively and/or positively in the second part of the injection mould (lower or upper mould), in that the molten thermoplastic material is injected via a runner (12) machined in the injection mould into the cavity formed by the injection mould, the insert and the tube ends, in that, after the solidifying of the thermoplastic material, at least initially still kept under pressure during cooling, the parts of the injection mould are taken apart, the mandrels are removed and the tubes joined to the insert via the thermoplastic material are removed from the first part of the injection mould, and in that then, if appropriate, the free ends of the tubes are likewise joined to the second insert via the injection mould.

2. Process according to Claim 1, characterized in that the molten material is injected under high pressure into the cavity formed by the injection mould, the insert and the tube ends.

3. Process according to Claim 1 or 2, characterized in that the tube is inserted into each opening of the insert in such a way that the tube end protrudes inwards out of the bottom of the insert.

4. Process according to one of Claims 1 to 3, characterized in that the injection mouls is temperatur-controlled for the solidifying of the thermoplastic material.

5. Process according to one of Claims 1 to 4, characterized in that the mandrels are cooled during and/or after the injection moulding operation.

6. Process according to Claim 5, characterized in that the mandrels have continuous cavities, to which a cooling medium is passed for the cooling of the mandrels.

7. Process according to Claim 6, characterized in that a gas, preferably air, is used as cooling medium.

8. Process according to one of Claims 1 to 7, characterized in that firstly a plurality of tubes are combined into tube groups, and the tube groups are inserted into corresponding continuous openings of the insert bottom.

9. Process according to Claim 8, characterized in that the tubes are combined into tube groups axially parallel or virtually axially parallel in such a way that the cross-section of the tube groups has, perpendicularly to the axis of the tubes, the form of a plate, for example of a flat, profiled or spiral plate.

10. Process according to Claim 8 or 9, characterized in that 20 to 2 000, preferably 20 to 100 tubes are in each case combined into tube groups.

11. Process according to one of Claims 1 to 10, characterized in that tubes of non-porous material or of porous material having a pore volume of up to 90%, of which the hydraulic diameter $d_h$ lies between 0.5 and 25 mm, preferably 0.8 to 15 mm, are used.

12. Process according to Claim 11, characterized in that the wall thickness of the tubes at the thinnest point have a valve of about 5 to 25% of the hydraulic diameter.

13. Process according to Claim 11 or 12, characterized in that tubes of non-porous material or of porous material having a pore volume of less than 50%, of which the hydraulic diameter $d_h$ lies between 0.5 and 5 mm, preferably between 0.8 and 3 mm, are used.

14. Process according to Claim 13, characterized in that the wall thickness of the tubes at the thinnest point has a value of about 7.5 to 17.5% of the hydraulic diameter $d_h$.

15. Process according to one of Claims 1 to 14, characterized in that, at least in the regions in which the joining to one another takes place, the tubes, the inserts and the thermoplastic material consist of thermoplastic polymers which, from their basic structure, belong to the same polymer type.

16. Process according to one of Claims 1 to 15, characterized in that, at least in the regions in which the joining to one another takes place, the tubes, the inserts and the thermoplastic material consist of thermoplastic polymers which have the same or virtually the same melting point or melting range.

17. Process according to Claim 15 or 16, characterized in that at least the tubes are heated before injection of the thermoplastic material to a temperature $T_c$ which lies below the melting point temperature or the average temperature of the melting range $T_m$ of the tube material, in that furthermore the thermoplastic material to be heated is heated to a temperature $T_i$ which is greater than $T_m$, and in that the temperature differences $T_i-T_m$ and $T_m-T_c$ are chosen such that the tubes are briefly heated during the injection of the melt so high that they fuse solidly to the insert in the region of the openings of the insert, at least over a length which corresponds to the wall thickness of the tubes.

18. Process according to Claim 17, characterized in that the temperature differences $T_i-T_m$ and $T_m-T_c$ are chosen such that the tubes are briefly heated during injection of the melt so high that they fuse to the insert over approximately the entire linear extent of the openings of the insert.

19. Process according to Claim 17 or 18, characterized in that the temperature difference $T_i-T_m$ is chosen between 20 and 90 °C, and preferably between 30 and 70 °C.

20. Process according to one of Claims 17 to 19, characterized in that the temperature difference $T_m-T_c$ is chosen at least equal to $T_i-T_m$ and at most equal to $T_m-40$ °C.

21. Process according to one of Claims 6 to 20, characterized in that the chosen temperatures of the tubes are set during and after the injection of the melt by means of a gas which is passed through the cavities of the mandrels.

22. Process according to one of Claims 1 to 21, characterized in that the thermoplastic material of the tubes, of the inserts and the injection material of injection-mouldable (co)polymer are based on a fluorocarbon composition, such as PVDF.

23. Process according to one of Claims 1 to 21, characterized in that the thermoplastic material of the tubes, of the inserts and the injection material consist of polypropylene.

24. Process according to one of Claims 1 to 21, characterized in that the thermoplastic material of the tubes, of the inserts and the injection material consist of polyethylene.

25. Process according to one of Claims 1 to 21, characterized in that the thermoplastic material of the tubes, of the inserts and the injection material consist of polybisphenol carbonate.

26. Apparatus for the production of heat and/or mass exchangers, which contain tubes, with an injection mould consisting of at least two parts, for carrying out the process according to Claims 1 to 25, characterized in that an insert (3, 70, 80) for the positioning of mandrels (7, 79, 89) is arranged at least partially positively in the first part (2, 71, 81) of the injection mould, in that the first part (2, 71, 81) of the injection mould has a common opening for all tubes and the insert (3, 70, 80) has a continuous opening for each tube, the inside dimension of which opening corresponds to the outside dimension of the respective tube, and in that the second part (1, 72, 82) of the injection mould contains means for receiving a number of mandrels (7, 79, 89), the outside dimension of which corresponds to that of the inside dimension of the respective tube and the number of which corresponds to that of the tubes of the heat and/or material exchanger to be produced, and in that a runner (12, 74, 84) is machined into the injection mould.

27. Apparatus according to Claim 26, characterized in that the mandrels (7, 79, 89) are fastened in the second part (1, 72, 82) of the injection mould.

28. Apparatus according to Claim 26 or 27, characterized in that the first and/or the second part of the injection mould contains a temperature-control device (13/14, 73, 83).

29. Apparatus according to one of Claims 26 to 28, characterized in that the first and/or the second part of the injection mould contains a heating device.

30. Apparatus according to one of Claims 26 to 29, characterized in that the mandrels (7, 89) each have a continuous cavity, all cavities of the mandrels being joined in the second part (1, 82) of the injection mould to a medium distributor.

31. Apparatus according to one of Claims 26 to 30, characterized in that the insert (3, 70, 80) in the first part of the injection mould consists of a thermoplastic polymer.

32. Apparatus according to one of Claims 26 to 31, characterized in that all parts of the injection mould with the exception of the insert consist of metal.

33. Apparatus according to one of Claims 26 to 32, characterized in that the continuous openings of the insert have a clearance fit with respect to the outside dimensions of the tubes.

34. Apparatus according to one of Claims 26 to 33, characterized in that the outside dimensions of the mandrels have a clearance fit with respect to the inside dimensions of the tubes.

35. Apparatus according to one of Claims 26 to 34, characterized in that the mandrels (7, 79, 89) are designed as tapered at the free end.

36. Apparatus according to one of Claims 26 to 35, characterized in that the length of the mandrels (7, 79, 89) is chosen such that, with assembled injection mould, they protrude out of the openings of the insert (3, 70, 80).

37. Apparatus according to one of Claims 26 to 36, characterized in that the mandrels (7) are designed as slightly conical towards the free end with the exception of the section which is received by the second part (1) of the injection mould.

38. Apparatus according to one of Claims 26 to 36, characterized in that the mandrels have a decreasing diameter towards the free end with the exception of the section which is received by the second part of the injection mould.

39. Apparatus according to one of Claims 26 to 38, characterized in that the insert (97) has on its inside at least one encircling groove (98).

40. Apparatus according to one of Claims 26 to 39, characterized in that the continuous openings of the insert (70, 80) are designed such that they can in each case receive a tube group (77, 87) combined from a plurality of individual tubes.

**Revendications**

1. Procédé de fabrication d'échangeurs de chaleur et/ou de matière, qui comprennent des tubes en matière plastique, de préférence en matière thermo-plastique, par coulée par injection d'un matériau thermoplastique, à l'aide d'un moule de coulée par injection se composant d'au moins deux parties, par exemple d'un moule supérieur et d'un moule inférieur (1, 2), et de mandrins (7) susceptibles d'être introduits dans les tubes, caractérisé en ce que dans la première partie du moule pour coulée par injection (moule supérieur ou inférieur), il est disposé un insert (3), composé de préférence de matière plastique, de préférence susceptible d'être relié aux tubes par fusion, dont le fond présente une ouverture traversante pour chaque tube, afin de servir d'élément de positionnement pour les tubes, d'une façon telle que l'insert soit disposé, au moins partiellement, par ajustement de forme, dans la première partie du moule pour coulée par injection, en ce qu'un tube (8) est introduit dans chaque ouverture de l'insert, en ce qu'un mandrin est placé dans chaque tube, à la suite de quoi le moule pour coulée par injection est fermé, de manière à ce que, le cas échéant, les mandrins soient positionnés, par ajustement de force et/ou de forme, dans la deuxième partie du moule pour coulée par injection (moule inférieur ou supérieur), en ce que le matériau thermo-plastique fondu est injecté par l'intermédiaire d'un canal d'injection (12) usiné dans le moule pour coulée par injection, dans l'espace creux qui est formé par le moule pour coulée par injection, par l'insert et les extrémités des tubes, en ce que les parties du moule pour coulée par injection sont séparées l'une de l'autre, après le refroidissement du matériau thermo- plastique, qui est encore maintenu sous pression lors du refroidissement, au moins initialement, les mandrins sont enlevés et les tubes reliés à l'insert, par l'intermédiaire du matériau thermo-plastique sont extraits de la première partie du moule pour coulée par injection, et en ce qu'ensuite, le cas échéant, les extrémités libres des tubes sont également reliés à un deuxième insert, par l'intermédiaire du moule pour coulée par injection.

2. Procédé selon la revendication 1, caractérisé en ce que la matière fondue est injectée sous haute pression dans l'espace creux, formé par le moule pour coulée par injection, l'insert et les extrémités des tubes.

3. Procédé selon la revendication 1 ou 2, caractérisé en ce qu'un tube est introduit dans chaque ouverture de l'insert, de telle manière que l'extrémité du tube ressorte intérieurement du fond de l'insert.

4. Procédé selon l'une des revendications 1 à 3, caractérisé en ce que le moule pour coulée par injection est soumis à une régulation de température, dans le but de refroidir le matériau thermo-plastique.

5. Procédé selon l'une des revendications 1 à 4, caractérisé en ce que les mandrins sont refroidis pendant et/ou après le processus de moulage par injection.

6. Procédé selon la revendication 5, caractérisé en ce que les mandrins présentent des espaces creux traversants, à travers lesquels est véhiculé un agent de refroidissement, dans le but de refroidir les mandrins.

7. Procédé selon la revendication 6, caractérisé en ce qu'un gaz, de préférence de l'air, est employé en tant qu'agent de refroidissement.

8. Procédé selon l'une des revendications 1 à 7, caractérisé en ce que tout d'abord, plusieurs tubes sont reliés pour former des groupes de tubes, et que les groupes sont introduits dans les ouvertures traversantes correspondantes du fond de l'insert.

9. Procédé selon la revendication 8, caractérisé en ce que les tubes sont groupés pour former des groupes de tubes, avec leurs axes parallèles ou presque parallèles, de manière que la section transversale des groupes de tubes présente, perpendiculairement à l'axe des tubes, la forme d'une plaque, par exemple, d'une plaque plane, profilée ou en spirale.

10. Procédé selon la revendication 8 ou 9, caractérisé en ce que l'on groupe chaque fois, de 20 à 2000 tubes, de préférence de 20 à 100 tubes, pour former des groupes de tubes.

11. Procédé selon l'une des revendications 1 à 10, caractérisé en ce que des tubes en matériau non poreux, ou en matériau poreux, sont utilisés avec un volume de pores allant jusqu'à 90%, tubes dont le diamètre hydraulique $d_h$ mesure entre 0,5 et 25 mm, de préférence entre 0,8 et 15 mm.

12. Procédé selon la revendication 11, caractérisé en ce que l'épaisseur de paroi des tubes présente à l'emplacement le plus mince, une valeur d'environ 5 à 25% du diamètre hydraulique.

13. Procédé selon la revendication 11 ou 12, caractérisé en ce que les tubes, en matériau non poreux, ou en matériau poreux, sont utilisés avec un volume de pores inférieur à 50%, tubes dont le diamètre hydraulique $d_h$ mesure entre 0,5 et 5 mm, de préférence entre 0,8 et 3 mm.

14. Procédé selon la revendication 13, caractérisé en ce que l'épaisseur de paroi des tubes présente, à l'emplacement le plus mince, une valeur d'environ 7,5 à 17,5% du diamètre hydraulique $d_h$.

15. Procédé selon l'une des revendications 1 à 14, caractérisé en ce qu'au moins dans les zones, dans lesquelles s'effectue la liaison entre eux, les tubes, les inserts et le matériau thermo-plastique se composent de polymères thermo-plastiques, qui appartiennent, par leur structure de base, à la même sorte de polymère.

16. Procédé selon l'une des revendications 1 à 15, caractérisé en ce qu'au moins dans les zones, dans lesquelles s'effectue la liaison entre eux, les tubes, les inserts et le matériau thermo-plastique se composent de polymères thermo-plastiques, qui présentent un point de fusion ou une plage de fusion identique, ou à peu près identique.

17. Procédé selon la revendication 15 ou 16, caractérisé en ce qu'au moins les tubes sont réchauffés, avant l'injection du matériau thermo-plastique, à une température $T_c$, qui se situe en-dessous de la température du point de fusion, ou de la température moyenne de la plage de fusion $T_m$, de la matière première des tubes, en ce qu'en outre, le matériau thermo-plastique à chauffer est chauffé à une température $T_i$, qui est plus élevée que $T_m$, et en ce que les différences de température $T_i$–$T_m$ et $T_m$–$T_c$ sont choisies de façon telle que les tubes sont, rapidement, chauffés si fortement par l'injection de la matière fondue, que ceux-ci se lient rigidement par fusion à l'insert, dans la zone des ouvertures de l'insert, sur au moins une longueur correspondant à l'épaisseur de paroi des tubes.

18. Procédé selon la revendication 17, caractérisé en ce que les différences de température $T_i$–$T_m$ et $T_m$–$T_c$ sont choisies de façon telle que les tubes sont, rapidement, chauffés si fortement par l'injection de la matière fondue, que ceux-ci fusionnent avec l'insert, sur environ la totalité de la zone longitudinale des ouvertures de l'insert.

19. Procédé selon la revendication 17 ou 18, caractérisé en ce que la différence de température $T_i$–$T_m$ est choisie entre 20 et 90 °C, de préférence entre 30 et 70 °C.

20. Procédé selon l'une des revendications 17 à 19, caractérisé en ce que la différence de température $T_m$–$T_c$ est choisie au moins identique à $T_i$–$T_m$, et au maximum identique à $T_m$–40 °C.

21. Procédé selon l'une des revendications 6 à 20, caractérisé en ce que les températures choisies pour les tubes sont réglées pendant et après l'injection de la matière fondue par l'intermédiaire d'un gaz, lequel est conduit à travers les espaces creux des mandrins.

22. Procédé selon l'une des revendications 1 à 21, caractérisé en ce que le matériau thermo-plastique des tubes, des inserts et le matériau d'injection se composent de (Co-)polymère, susceptible d'être coulé par injection, et dont la base est un composé d'hydrocarbure fluoré, tel que le PVDF.

23. Procédé selon l'une de revendications 1 à 21, caractérisé en ce que le matériau thermo-plastique des tubes, des inserts et le matériau d'injection se composent de polypropylène.

24. Procédé selon l'une des revendications 1 à 21, caractérisé en ce que le matériau thermo-plastique des tubes, des inserts et le matériau d'injection se composent de polyéthylène.

25. Procédé selon l'une des revendications 1 à 21, caractérisé en ce que le matériau thermo-plastique des tubes, des inserts et le matériau d'injection se composent de carbonate de polybisphénol.

26. Dispositif de fabrication d'un échangeur de chaleur et/ou de matière, qui comprend des tubes, avec un moule pour coulée par injection se composant d'au moins deux parties, pour la mise en œuvre du procédé selon l'une des revendications 1 à 25, caractérisé en ce que, dans la première partie (2, 71, 81) du moule pour coulée par injection, un insert (3, 70, 80) est disposé pour le positionnement de mandrins (7, 79, 89), au moins partiellement par ajustement de forme, en ce que la première partie (2, 71, 81) du moule pour coulée par injection présente, pour tous les tubes, une ouverture commune, et l'insert (3, 70, 80) présente, pour chaque tube, une ouverture traversante, dont les dimensions intérieures correspondent aux dimensions extérieures du tube concerné, et en ce que la deuxième partie (1, 72, 82) du moule pour coulée par injection comprend des dispositifs, servant au logement d'un certain nombre de mandrins (7, 79, 89), dont les dimensions extérieures correspondent aux dimensions intérieures du tube concerné, et dont le nombre correspond à celui des tubes de l'échangeur de chaleur et/ou de matière à fabriquer, et en ce qu'un canal d'injection (12, 74, 84) est usiné dans le moule pour coulée par injection.

27. Dispositif selon la revendication 26, caractérisé en ce que les mandrins (7, 79, 89) sont fixés dans la deuxième partie (1, 72, 82) du moule pour coulée par injection.

28. Dispositif selon la revendication 26 ou 27, caractérisé en ce que la première partie et/ou la deuxième partie du moule pour coulée par injection comprend un dispositif de régulation de température (13/14, 73, 83).

29. Dispositif selon l'une des revendications 26 à 28, caractérisé en ce que la première et/ou la deuxième partie du moule pour coulée par injection comprend un dispositif de chauffage.

30. Dispositif selon l'une des revendications 26 à 29, caractérisé en ce que les mandrins (7, 89) présentent chacun un espace creux traversant, tous les espaces creux des mandrins situés dans la deuxième partie (1, 82) du moule pour coulée par injection étant reliés à un distributeur de fluide.

31. Dispositif selon l'une des revendications 26 à 30, caractérisé en ce que l'insert (3, 70, 80) situé dans la première partie du moule pour coulée par injection, se compose de polymère thermo-plastique.

32. Dispositif selon l'une des revendications 26 à 31, caractérisé en ce que toutes les parties du moule pour coulée par injection se composent de métal, à l'exception de l'insert.

33. Dispositif selon l'une des revendications 26 à 32, caractérisé en ce que les ouvertures traversantes de l'insert présentent un ajustement avec jeu, par rapport aux dimensions extérieures des tubes.

34. Dispositif selon l'une des revendications 26 à 33, caractérisé en ce que les dimensions extérieures des mandrins présentent un ajustement avec jeu, par rapport aux dimensions intérieures des tubes.

35. Dispositif selon l'une des revendications 26 à 34, caractérisé en ce que les mandrins (7, 79, 89) sont effilés à l'extrémité libre.

36. Dispositif selon l'une des revendications 26 à 35, caractérisé en ce que la longueur des mandrins (7, 79, 89) est choisie de façon telle, qu'ils dépassent des ouvertures de l'insert (3, 70, 80), lorsque le moule pour coulée par injection est assemblé.

37. Dispositif selon l'une des revendications 26 à 36, caractérisé en ce que les mandrins (7) sont réalisés légèrement côniques, vers l'extrémité libre, à l'exception de la section qui est logée dans la deuxième partie (1) du moule pour coulée par injection.

38. Dispositif selon l'une des revendications 26 à 37, caractérisé en ce que les mandrins présentent un diamètre allant en diminuant vers l'extrémité libre, à l'exception de la section qui est logée dans la deuxième partie du moule pour coulée par injection.

39. Dispositif selon l'une des revendications 26 à 38, caractérisé en ce que l'insert (97) présente sur son côté intérieur au moins une rainure circonférentielle (98).

40. Dispositif selon l'une des revendications 26 à 39, caractérisé en ce que les ouvertures traversantes de l'insert (70, 80) sont réalisés de telle manière, qu'elles peuvent loger à chaque fois un groupe de tubes (77, 87) composé de plusieurs tubes individuels.

EP 0 168 558 B1

**Fig.1**

B

4   5   6  15      7        1

130

13                                    13

12

A

14

9

3

10

2

11

8

19

Fig. 2    Fig. 3    Fig. 4

Fig. 5    Fig. 6    Fig. 7

Fig. 8

## Fig.9

## Fig.10

## Fig.11

## Fig.12

## Fig.13

## Fig.14

## Fig.15

## Fig.16

26¹  26  D  26¹¹  26¹¹¹¹  C  26¹¹¹  26¹¹¹

Fig. 27

Fig. 26

Fig. 25

Fig. 24

Fig. 23

Fig. 22

Fig. 21

Fig. 20

Fig. 19

Fig. 18

Fig.17

Fig.28

Fig.29

Fig.30

53

54

55
56

57
58

Fig.31

59

Fig.32

61

60

62

Fig.33

64

63

65

## Fig . 34

## Fig . 35

Fig.36

Fig.37

Fig.38

95

E

93

92

94

X

94¹

G

92

93

F

95

94¹¹

96

Fig.39

## Fig.41

102

103

104

## Fig.42

105

106

107

## Fig.40

101

98

97

97

99

100

# Fig.43

109

108